# EUROPEAN PATENT APPLICATION

(11) **EP 4 779 853 A1**
(43) Date of publication of application: **22.07.2026**
(21) Application number: 24869722.9
(22) Date of filing: 09.05.2024
(51) Int. Cl.: H02M 1/08

(54) **DRIVE CHIP, POWER CHIP, AND SWITCH MODE POWER SUPPLY**

(30) Priority: 28.09.2023 CN 202311282738
(71) Applicant: Huawei Digital Power Technologies Co., Ltd., Shenzhen, Guangdong 518043 (CN)
(72) Inventor: XIAO, Jingbo, Shenzhen, Guangdong 518043 (CN); CHEN, Hong, Shenzhen, Guangdong 518043 (CN); DONG, Shaoqing, Shenzhen, Guangdong 518043 (CN)
(74) Representative: Gill Jennings & Every LLP
(86) International application number: PCT/CN2024/092057
(87) International publication number: WO 2025/066154

(57) **Abstract**

Embodiments of this application disclose a drive chip, a power chip, and a switching power supply. The drive chip includes a drive circuit and a current generation circuit. The current generation circuit includes a sampling circuit, a slope control circuit, and a current output circuit. The sampling circuit controls the current output circuit to output a sampling current of a rectifier transistor in an on duration of the rectifier transistor. The slope control circuit controls, based on a sampling current that is of the rectifier transistor and that is output by the current output circuit in an on duration of the rectifier transistor in a k^{th} control period and a k^{th} analog current that is of a main power transistor and that is output by the current output circuit in an on duration of the main power transistor in the k^{th} control period, the current output circuit to output a (k+1)^{th} analog current of the main power transistor in an on duration of the main power transistor in a (k+1)^{th} control period. With the configuration, based on the sampling current of the rectifier transistor and the analog current of the main power transistor, the drive circuit is enabled to control on and off of the main power transistor and the rectifier transistor, to improve control precision of the main power transistor and the rectifier transistor.

## Description

### CROSS-REFERENCE TO RELATED APPLICATIONS

This application claims priority to Chinese Patent Application No. 202311282738.7, field with the China National Intellectual Property Administration on September 28, 2023 and entitled "DRIVE CHIP, POWER CHIP, AND SWITCHING POWER SUPPLY", which is incorporated herein by reference in its entirety.

### TECHNICAL FIELD

This application relates to the field of switching power supply technologies, and in particular, to a drive chip, a power chip, and a switching power supply.

### BACKGROUND

A switching power supply may also be referred to as a switch mode power supply (SMPS). The switching power supply may convert an input voltage (an alternating current or a direct current), to output an output voltage that adapts to a load. In a control solution of the switching power supply, information about an inductor current is usually needed as an input for loop feedback. As a switching frequency increases, on time of a main power transistor of the switching power supply becomes shorter, which leads to inaccurate sampling of the inductor current and affects control effect of the switching power supply.

### SUMMARY

Embodiments of this application provide a drive chip, a power chip, and a switching power supply, to resolve a problem of inaccurate sampling of an inductor current.

According to a first aspect, an embodiment of this application provides a drive chip. The drive chip includes a drive circuit and a current generation circuit. The drive circuit is configured to connect to a main power transistor and a rectifier transistor, and the drive circuit can control the main power transistor and the rectifier transistor. In addition, the current generation circuit is disposed in the drive chip, and the current generation circuit includes a sampling circuit, a slope control circuit, and a current output circuit. The sampling circuit is configured to be connected to the rectifier transistor, the sampling circuit is connected to the current output circuit, and the slope control circuit is connected to the current output circuit. The current output circuit can output a sampling current of the rectifier transistor in an on duration of the rectifier transistor in each control period, and output an analog current of the main power transistor in an on duration of the main power transistor in each control period. The sampling circuit can control, in the on duration of the rectifier transistor in each control period based on a current flowing through the rectifier transistor, the current output circuit to output the sampling current of the rectifier transistor. In addition, the slope control circuit can control, based on a sampling current that is of the rectifier transistor and that is output by the current output circuit in an on duration of the rectifier transistor in a k^{th} control period and a k^{th} analog current that is of the main power transistor and that is output by the current output circuit in the on duration of the main power transistor in the k^{th} control period, the current output circuit to output a (k+1)^{th} analog current of the main power transistor in an on duration of the main power transistor in a (k+1)^{th} control period. k is an integer greater than 0. With the configuration, the k^{th} analog current of the main power transistor and the sampling current of the rectifier transistor that are output in the k^{th} control period may be used as feedback parameters of the (k+1)^{th} analog current that is of the main power transistor and that is output in the (k+1)^{th} control period, which improves accuracy of the (k+1)^{th} analog current that is of the main power transistor and that is output in the (k+1)^{th} control period. Furthermore, a required inductor current can be obtained without directly sampling a current flowing through the main power transistor, which can avoid a problem of inaccurate sampling precision caused by sampling an inductor current. In addition, both the sampling current of the rectifier transistor and the analog current of the main power transistor are input into a controller, and the controller synthesizes the sampling current of the rectifier transistor and the analog current of the main power transistor, to form an inductor current that includes the sampling current of the rectifier transistor and the analog current of the main power transistor. In this way, the controller can regulate and control a pulse width modulation signal based on the inductor current obtained through synthesizing, and then output, to the drive circuit, a pulse width modulation signal obtained after regulation and control, so that the drive circuit can control, based on the pulse width modulation signal obtained after regulation and control, on and off of the main power transistor and the rectifier transistor, to improve control precision of the main power transistor and the rectifier transistor.

In addition, because the current generation circuit in this application is connected to the rectifier transistor, an inductor current can be obtained through synthesizing. Therefore, there is no need to additionally dispose, on the drive chip, a pin connected to an output voltage of a switching power supply. This is applicable to a mainstream product with a small size and a small quantity of pins, so that costs can be lower and an application scope can be wider.

In addition, according to the current generation circuit in embodiments of this application, a slope of the analog current of the main power transistor automatically changes with a change of an inductance value of a power inductor, so that an inductor current output by the current generation circuit can adapt to the change of the inductance value of the power inductor. Furthermore, the current generation circuit in this application can further adapt to a change of a duty cycle of the pulse width modulation signal, and fitting time of the slope of the analog current of the main power transistor follows on time of the main power transistor in real time.

In some embodiments, the slope control circuit includes a first sampling circuit, a second sampling circuit, and a regulation and control circuit. The first sampling circuit is connected to the current output circuit, the second sampling circuit is connected to the current output circuit, and the regulation and control circuit is separately connected to the first sampling circuit, the second sampling circuit, and the current output circuit. During specific application, the first sampling circuit can collect a corresponding first sampling voltage when the current output circuit outputs the k^{th} analog current of the main power transistor in the on duration of the main power transistor in the k^{th} control period. In addition, the second sampling circuit can collect a corresponding second sampling voltage when the current output circuit outputs the sampling current of the rectifier transistor in the on duration of the rectifier transistor in the k^{th} control period. Based on this, the regulation and control circuit receives the first sampling voltage and the second sampling voltage, and controls, based on the first sampling voltage and the second sampling voltage that are received, the current output circuit to output the (k+1)^{th} analog current of the main power transistor in the on duration of the main power transistor in the (k+1)^{th} control period. With the configuration, the fitting time of the slope of the (k+1)^{th} analog current of the main power transistor can track the on time of the main power transistor in real time. In addition, voltages that correspond to the k^{th} analog current of the main power transistor and the sampling current of the rectifier transistor that are output in the k^{th} control period may be used as feedback parameters of the (k+1)^{th} analog current that is of the main power transistor and that is output in the (k+1)^{th} control period, which improves accuracy of the (k+1)^{th} analog current that is of the main power transistor and that is output in the (k+1)^{th} control period.

It may be understood that the current generation circuit can work in K consecutive control periods, and each control period includes the on duration of the main power transistor and the on duration of the rectifier transistor. The on duration of the main power transistor in each control period occurs before the on duration of the rectifier transistor. Herein, K is an integer greater than 1, and 1≤k≤K.

For example, the regulation and control circuit includes a regulation and generation circuit, a first switch, and a first controlled current source. The regulation and generation circuit is connected to the first sampling circuit, the second sampling circuit, and a control end of the first controlled current source. A first end of the first controlled current source is connected to the current output circuit via the first switch, and a second end of the first controlled current source is grounded. In addition, the regulation and generation circuit can receive the first sampling voltage and the second sampling voltage, and control, based on the first sampling voltage and the second sampling voltage that are received, the first controlled current source to generate a first current. Furthermore, the first switch can be in an on state in the on duration of the main power transistor, so that the first current generated by the first controlled current source can be input to the current output circuit in the on duration of the main power transistor, to control the current output circuit to output the (k+1)^{th} analog current of the main power transistor in the on duration of the main power transistor. With the configuration, the fitting time of the slope of the (k+1)^{th} analog current of the main power transistor can track the on time of the main power transistor in real time.

If the first controlled current source is set as a voltage controlled current source (VCCS), the regulation and generation circuit outputs a control voltage to the control end of the first controlled current source, so that the first current generated by the first controlled current source can change with a change of the control voltage. For example, the first current increases as the control voltage increases. Alternatively, the first controlled current source may be formed in a current mirror structure. This is not limited herein.

In some examples, the regulation and generation circuit includes a first error amplifier (EA). A negative-phase input of the first error amplifier is connected to the first sampling circuit, a positive-phase input of the first error amplifier is connected to the second sampling circuit, and an output of the first error amplifier is connected to the control end of the first controlled current source. During actual application, the negative-phase input of the first error amplifier receives the first sampling voltage output by the first sampling circuit, and the positive-phase input of the first error amplifier receives the second sampling voltage output by the second sampling circuit, to output the control voltage based on the first sampling voltage and the second sampling voltage, so that the first controlled current source generates the first current.

Further, the regulation and generation circuit further includes a second switch. The second switch is connected between the negative-phase input of the first error amplifier and the positive-phase input of the first error amplifier. During actual application, a control end of the second switch receives a third pulse control signal, and the second switch is turned on when the third pulse control signal is in a second level, so that the negative-phase input is connected to the positive-phase input of the first error amplifier. In addition, the second switch is turned off when the third pulse control signal is in a first level, which disconnects the negative-phase input and the positive-phase input of the first error amplifier.

In some other examples, the regulation and generation circuit includes a comparator, a selector, and a signal generator. A negative-phase input of the comparator is connected to the first sampling circuit, a positive-phase input of the comparator is connected to the second sampling circuit, and an output of the comparator is connected to a first input of the selector. A second input of the selector is configured to receive a selection trigger signal, a first output of the selector is connected to a first control end of the signal generator, and a second output of the selector is connected to a second control end of the signal generator. An output of the signal generator is connected to the control end of the first controlled current source. Based on this, the negative-phase input of the comparator can receive the first sampling voltage, the positive-phase input of the comparator can receive the second sampling voltage, and the comparator enables the output of the comparator to output a selection control signal based on the first sampling voltage and the second sampling voltage. The selector is configured to control, in response to the selection control signal and the selection trigger signal, the signal generator to output the control voltage based on a first reference current or a second reference current. For example, the selection trigger signal is in the first level (for example, a high level). If the selection control signal is in the first level (for example, a high level), the selector may control the signal generator to output the first reference current to the control end of the first controlled current source, so that the control end of the first controlled current source is charged, and the control voltage at the control end of the first controlled current source increases; and if the selection control signal is in the second level (for example, a low level), the selector may control the signal generator to output the second reference current to the control end of the first controlled current source, so that the control end of the first controlled current source is discharged, to decrease the control voltage at the control end of the first controlled current source. In addition, if the selection trigger signal is in the second level (for example, a low level), the selector does not control outputting of the signal generator.

For example, the signal generator includes a third switch, a fourth switch, a first current source, a second current source, and a storage capacitor. A first end of the first current source is connected to a first reference signal end, and a second end of the first current source is connected to a first end of the third switch. A second end of the third switch is connected to the control end of the first controlled current source, and a control end of the third switch is connected to the first output of the selector. A first end of the fourth switch is connected to the control end of the first controlled current source, a second end of the fourth switch is connected to a first end of the second current source, and a control end of the fourth switch is connected to the second output of the selector. A second end of the second current source is connected to a second reference signal end. A first end of the storage capacitor is connected to the control end of the first controlled current source, and a second end of the storage capacitor is connected to the second reference signal end. In addition, the first current source is configured to output the first reference current, and the second current source is configured to output the second reference current. During specific application, the selector controls the third switch to be turned on, the first current source outputs the first reference current to the storage capacitor, so that the storage capacitor is charged. A voltage obtained after the storage capacitor is charged is used as the control voltage and is output to the control end of the first controlled current source. Furthermore, the selector controls the fourth switch to be turned on, the second current source outputs the second reference current to the storage capacitor, so that the storage capacitor is discharged. A voltage obtained after the storage capacitor is discharged is used as the control voltage and is output to the control end of the first controlled current source. In addition, a voltage at the first reference signal end is higher than a voltage at the second reference signal end. For example, the first reference signal end may be a second power supply end, and the second reference signal end may be grounded.

During specific implementation, the first sampling circuit can be controlled to collect, in a first period of the on duration of the main power transistor, the (k+1)^{th} analog current that is of the main power transistor and that is output by the current output circuit, convert the collected current into the first sampling voltage, and directly output the first sampling voltage in the first period. The first period is a time period from a first reference moment to an end moment that are of the on duration of the main power transistor. During actual application, a first pulse control signal is input to the first sampling circuit to control the first sampling circuit. Specifically, when the first pulse control signal is in the first level, the first sampling circuit is controlled to collect the (k+1)^{th} analog current that is of the main power transistor and that is output by the current output circuit, convert the collected current into the first sampling voltage, and output the first sampling voltage. When the first pulse control signal is in the second level, outputting the first sampling voltage is kept. A time period in which the first pulse control signal is in the first level is used as the first period. In addition, the first sampling circuit can further keep outputting the first sampling voltage in the on duration of the rectifier transistor.

The first reference moment of the first period may be enabled to be close to the end moment of the on duration of the main power transistor, so that the first sampling voltage is collected in a time period that is of the on duration of the main power transistor and that is about to end. The first reference moment is a moment from a start moment to the end moment of the on duration of the main power transistor, so that a part of a time period of the on duration of the main power transistor is set as the first period. Alternatively, the start moment of the on duration of the main power transistor is used as the first reference moment, to align the first reference moment with the start moment of the on duration of the main power transistor, so that the entire on duration of the main power transistor is set as the first period.

In this application, the first sampling circuit includes a first sample and hold circuit (S/H circuit). A control end of the first sample and hold circuit is configured to receive the first pulse control signal, so that the first sample and hold circuit can work under control of the first pulse control signal. In addition, an input of the first sample and hold circuit is connected to an output of the current output circuit, and an output of the first sample and hold circuit is connected to the regulation and control circuit.

During specific implementation, the second sampling circuit is also controlled to collect, in a second period of the on duration of the rectifier transistor, the sampling current that is of the rectifier transistor and that is output by the current output circuit, convert the collected current into the second sampling voltage, and directly output the second sampling voltage in the second period. The second period is a time period from a start moment to a second reference moment that are of the on duration of the rectifier transistor. During actual application, a second pulse control signal is input to the second sampling circuit. When the second pulse control signal is in the first level, the second sampling circuit is controlled to collect the sampling current that is of the rectifier transistor and that is output by the current output circuit, convert the collected current into the second sampling voltage, and then output the second sampling voltage. When the second pulse control signal is in the second level, outputting the second sampling voltage is kept. A time period in which the second pulse control signal is in the first level is used as the second period. In addition, the second sampling circuit can further keep outputting the second sampling voltage in the on duration of the main power transistor.

The second reference moment of the second period may be enabled to be close to the start moment of the on duration of the rectifier transistor, to collect the second sampling voltage in a time period that just starts in the on duration of the rectifier transistor. The second reference moment is a moment from the start moment to an end moment of the on duration of the rectifier transistor, so that a part of a time period of the on duration of the rectifier transistor is set as the second period. In addition, the second sampling circuit further needs to be controlled to keep outputting the second sampling voltage in a period other than the second period in the on duration of the rectifier transistor.

In some embodiments, the current output circuit includes a second controlled current source. A control end of the second controlled current source is connected to the sampling circuit and the slope control circuit. A first end of the second controlled current source is connected to the second power supply end, and a second end of the second controlled current source is connected to the controller. Further, the current output circuit further includes a voltage divider resistor, and the second end of the second controlled current source is grounded via the voltage divider resistor. Based on this, the sampling circuit may output a voltage to the control end of the second controlled current source, so that the second controlled current source can output, in response to a voltage that is generated to the control end of the second controlled current source through control over the sampling circuit, the sampling current of the rectifier transistor in the on duration of the rectifier transistor. In addition, the slope control circuit outputs a current to the control end of the second controlled current source, to regulate and control a voltage at the control end of the second controlled current source in the on duration of the main power transistor by using the current. In this way, the second controlled current source can output, in response to a voltage that is generated to the control end of the second controlled current source through control over the slope control circuit, the (k+1)^{th} analog current of the main power transistor.

The second controlled current source is also set to the VCCS. In this way, the second controlled current source generates the sampling current of the rectifier transistor based on the voltage input by the sampling circuit to the control end of the second controlled current source. In addition, the voltage at the control end of the second controlled current source is adjusted based on the current input by the slope control circuit to the control end of the second controlled current source, so that the second controlled current source generates the (k+1)^{th} analog current of the main power transistor. The (k+1)^{th} analog current of the main power transistor changes with a change of a voltage at the control end of the second controlled current source. For example, when the voltage at the control end of the second controlled current source decreases, the second controlled current source can generate a (k+1)^{th} analog current that is of the main power transistor and whose current value increases, and enable a slope of the (k+1)^{th} analog current of the main power transistor to increase. Alternatively, the second controlled current source may be formed in a current mirror structure. This is not limited herein.

In some embodiments, the sampling circuit includes a current detection circuit and a third sampling circuit. The current detection circuit is separately connected to a control end, a first end, and a second end of the rectifier transistor. The third sampling circuit is separately connected to the control end of the rectifier transistor, the current detection circuit, and the current output circuit. During specific application, the current detection circuit can generate, in response to a drive signal at the control end of the rectifier transistor, a first control signal based on a current at the first end of the rectifier transistor and a current at the second end of the rectifier transistor in the on duration of the rectifier transistor. The third sampling circuit can also output, in response to the drive signal at the control end of the rectifier transistor, the first control signal to the current output circuit in the on duration of the rectifier transistor, to control the current output circuit to generate the sampling current of the rectifier transistor. During specific application, the third sampling circuit can further keep outputting, in response to the drive signal at the control end of the rectifier transistor, the first control signal at the start moment of the on duration of the main power transistor.

For example, the current detection circuit includes a first transistor, a second transistor, a third transistor, a fourth transistor, and a second error amplifier (EA). A control end of the first transistor, a control end of the second transistor, and the control end of the rectifier transistor are connected to each other. A first end of the first transistor is connected to the first end of the rectifier transistor, and a second end of the first transistor is connected to a negative-phase input of the second error amplifier. A first end of the second transistor is connected to the second end of the rectifier transistor, and a second end of the second transistor is connected to a positive-phase input of the second error amplifier. A control end of the third transistor, a control end of the fourth transistor, and an output of the second error amplifier are connected to each other. A first end of the third transistor is connected to the second end of the first transistor, and a second end of the third transistor is connected to the second power supply end. A first end of the fourth transistor is connected to the second end of the second transistor, and a second end of the fourth transistor is connected to the second power supply end. The output of the second error amplifier is further connected to the third sampling circuit.

The third sampling circuit includes a third sample and hold circuit (S/H circuit). A control end of the third sample and hold circuit is connected to the control end of the rectifier transistor, so that the third sample and hold circuit can work under control of the drive signal at the control end of the rectifier transistor. In addition, an input of the third sample and hold circuit is connected to an output of an error amplifier in the current detection circuit, and an output of the third sample and hold circuit is connected to the current output circuit.

According to a second aspect, an embodiment of this application further provides a power chip. The power chip includes a power device and a drive chip. The power device includes a main power transistor and a rectifier transistor, and the drive chip is separately connected to the main power transistor and the rectifier transistor. Furthermore, the drive chip can output a sampling current of the rectifier transistor and an analog current of the main power transistor, and control the main power transistor and the rectifier transistor. In addition, the drive chip is the drive chip according to the first aspect or the possible designs of the first aspect. Because the drive chip provided in embodiments of this application can resolve a problem of inaccurate sampling of an inductor current, control effect of the power chip can be improved.

According to a third aspect, an embodiment of this application further provides a switching power supply. The switching power supply includes a controller and a power chip. The controller is connected to the power chip, so that the controller can receive a sampling current of a rectifier transistor and an analog current of a main power transistor that are output by the power chip, and output a pulse width modulation signal to the power chip based on the sampling current of the rectifier transistor and the analog current of the main power transistor. The power chip is configured to receive the pulse width modulation signal, and drive, based on the pulse width modulation signal, the drive chip to control on and off of the main power transistor, and control on and off of the rectifier transistor. In addition, the power chip is the power chip that is in the possible designs of the second aspect and that has a drive chip. Because the drive chip provided in embodiments of this application can resolve a problem of inaccurate sampling of an inductor current, control effect of the switching power supply can be improved.

### BRIEF DESCRIPTION OF DRAWINGS

FIG. 1a is a diagram of a structure of a switching power supply according to an embodiment of this application;
FIG. 1b is a diagram of a signal time sequence according to an embodiment of this application;
FIG. 2 is a diagram of a structure of a power chip according to an embodiment of this application;
FIG. 3a to FIG. 3c are diagrams of structures of a power chip according to another embodiment of this application;
FIG. 4 is a diagram of a signal time sequence according to another embodiment of this application;
FIG. 5 is a diagram of a structure of a drive chip according to an embodiment of this application;
FIG. 6 is a diagram of a specific structure of a drive chip according to an embodiment of this application;
FIG. 7 is a diagram of a specific structure of a drive chip according to another embodiment of this application;
FIG. 8a is a diagram of a signal time sequence according to another embodiment of this application;
FIG. 8b is a diagram of a signal time sequence according to another embodiment of this application;
FIG. 8c is a diagram of a signal time sequence according to another embodiment of this application;
FIG. 9 is a diagram of a specific structure of a drive chip according to another embodiment of this application;
FIG. 10a is a diagram of a signal time sequence according to another embodiment of this application;
FIG. 10b is a diagram of a signal time sequence according to another embodiment of this application; and
FIG. 10c is a diagram of a signal time sequence according to another embodiment of this application.

### Reference numerals:

10: switching power supply; 20: power chip; 30: controller; 40: drive chip; 50: power device; 60: drive circuit; 61/61a/61b: first gate drive circuit; 62/62a/62b: second gate drive circuit; 70/70a/70b: current generation circuit; 71: sampling circuit; 711: current detection circuit; 712: third sampling circuit; QS1: first transistor; QS2: second transistor; QS3: third transistor; QS4: fourth transistor; 7111: second error amplifier; 7121: third sample and hold circuit; 72: slope control circuit; 721: first sampling circuit; 7211: first sample and hold circuit; 722: second sampling circuit; 7221: second sample and hold circuit; 723: regulation and control circuit; 73: current output circuit; 730: regulation and generation circuit; 731: first error amplifier; 732: comparator; 733: selector; 734: signal generator; K1: first switch; K2: second switch; K3: third switch; K4: fourth switch; IY1: first current source; IY2: second current source; CS: storage capacitor; 740: first controlled current source; 750: second controlled current source; Q2/Q2a/Q2b: main power transistor; Q1/Q1a/Q1b: rectifier transistor; GH//GHa/GHb/GL/GLa/GLb: control end; SW/SWa/SWb: first end; PGND/PGNDa/PGNDb: second end; L: power inductor; C: capacitor; RL: load.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the description of this application, the term "a plurality of" is understood as "at least two". In addition, it should be understood that in the description of this application, terms such as "first" and "second" are merely used for a purpose of distinction in description, but should not be understood as indicating or implying relative importance, or should not be understood as indicating or implying a sequence.

It should be noted that, "connection" in embodiments of this application is an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, and A and B are connected through C.

It should be noted that same reference numerals in the accompanying drawings of this application denote same or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To facilitate understanding of the technical solutions provided in embodiments of this application, the following first describes an application scenario of the solutions of this application.

A drive chip provided in embodiments of this application may be widely used in a power chip. In addition, the power chip provided in embodiments of this application may also be widely used in a switching power supply. Because the drive chip provided in embodiments of this application can resolve a problem of inaccurate sampling of an inductor current, control effect of the switching power supply can be improved. Further, the switching power supply provided in embodiments of this application may be widely used in various electronic devices, for example, an industrial control device, a communication device (for example, a server or a base station), power equipment, an instrument and a meter, and a security protection and monitoring device. It may be understood that the switching power supply in embodiments of this application is intended to include but is not limited to be used in these devices and any other proper type of device.

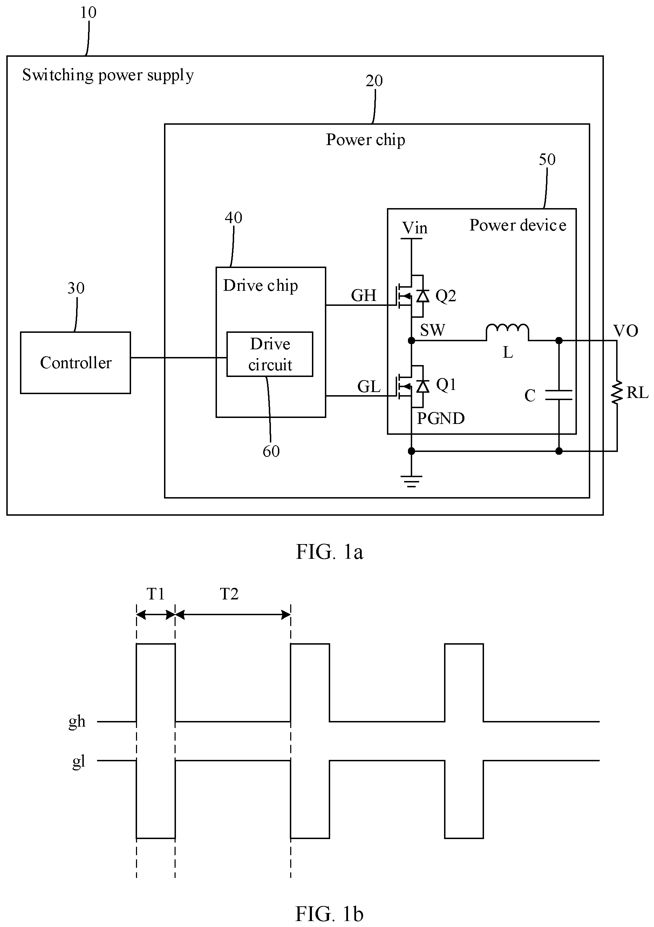

FIG. 1a is a diagram of a structure of a switching power supply according to an embodiment of this application. With reference to FIG. 1a, the switching power supply 10 includes a controller 30 and a power chip 20. The power chip 20 includes a power device 50 and a drive chip 40. The power device 50 includes devices such as a main power transistor Q2, a rectifier transistor Q1, a power inductor L, and a capacitor C. The power device 50 is connected to a load RL, the controller 30 is connected to the drive chip 40, and the drive chip 40 is separately connected to a control end GH of the main power transistor Q2 and a control end GL of the rectifier transistor Q1, to control on and off of the main power transistor Q2 and the rectifier transistor Q1. In addition, Vin represents a bus voltage of the switching power supply 10, and VO represents an output voltage of the switching power supply 10.

The main power transistor, the rectifier transistor, and transistors and switches described below may be one or more of a plurality of types of switch devices such as a metal-oxide semiconductor field-effect transistor (MOSFET), a bipolar junction transistor (BJT), an insulated gate bipolar transistor (IGBT), and a silicon carbide (SiC) power transistor. The switch devices are not enumerated in embodiments of this application. Each switch device may include a first end, a second end, and a control end. The control end is configured to control on or off of the switch device. When the switch device is turned on, a current may be transmitted between the first end and the second end of the switch device. When the switch device is turned off, a current cannot be transmitted between the first end and the second end of the switch device. In addition, the controller may be a general-purpose central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof. Alternatively, the controller may be a combination of processors implementing a computing function, for example, a combination of one or more microprocessors, or a combination of the DSP and a microprocessor.

In some examples, with reference to FIG. 1a, the main power transistor Q2 and the rectifier transistor Q1 may be used in a half-bridge structure. In addition, the drive chip 40 has a drive circuit 60. The drive circuit 60 is separately connected to the control end GH of the main power transistor Q2 and the control end GL of the rectifier transistor Q1. The controller 30 outputs pulse width modulation (PWM) signals to the power chip 20. The power chip 20 receives PWM signals hin and lin. The PWM signals hin and lin are input to the drive circuit 60. The drive circuit 60 performs related processing (for example, enhancement processing) on the PWM signal hin to generate a drive signal gh, and performs related processing (for example, enhancement processing) on the PWM signal lin to generate a drive signal gl. The drive circuit 60 outputs the drive signal gh to the control end GH of the main power transistor Q2, to control on and off of the main power transistor Q2. In addition, the drive circuit 60 outputs the drive signal gl to the control end GL of the rectifier transistor Q1, to control on and off of the rectifier transistor Q1. For example, FIG. 1b is a diagram of a signal time sequence according to an embodiment of this application. With reference to FIG. 1b, in an on duration T1 of the main power transistor, the drive signal gh is in a high level, which controls the main power transistor Q2 to be turned on; and the drive signal gl is in a low level, which controls the rectifier transistor Q1 to be turned off. In an on duration T2 of the rectifier transistor, the drive signal gh is in the low level, which controls the main power transistor Q2 to be turned off; and the drive signal gl is in the high level, which controls the rectifier transistor Q1 to be turned on.

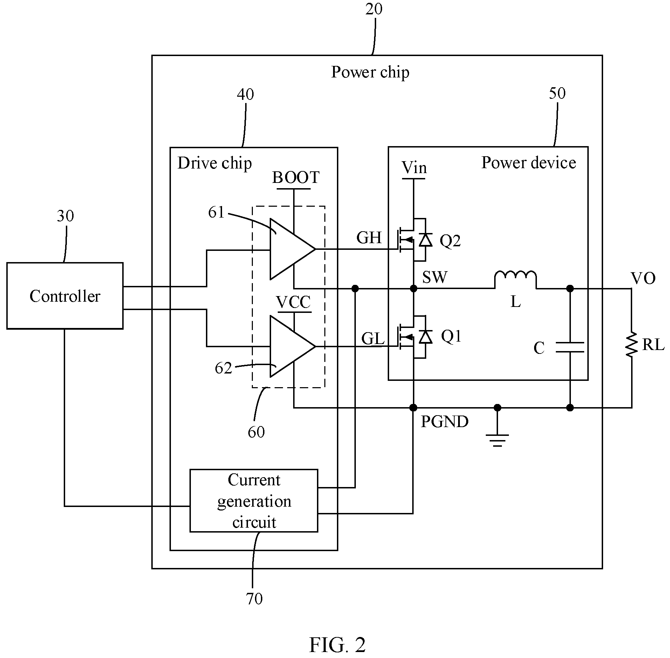

The drive circuit in this embodiment of this application may include a gate driver, to control on and off of the main power transistor and the rectifier transistor via the gate driver. For example, FIG. 2 is a diagram of a structure of the power chip according to an embodiment of this application. With reference to FIG. 2, the drive circuit 60 includes a first gate drive circuit 61 and a second gate drive circuit 62. The controller 30 is separately connected to an input of the first gate drive circuit 61 and an input of the second gate drive circuit 62. An output of the first gate drive circuit 61 is connected to the control end GH of the main power transistor Q2, and an output of the second gate drive circuit 62 is connected to the control end GL of the rectifier transistor Q1. A first voltage supply end of the first gate drive circuit 61 is connected to a first power supply end BOOT, and a second voltage supply end of the first gate drive circuit 61 is connected to a first end SW of the rectifier transistor Q1. A first voltage supply end of the second gate drive circuit 62 is connected to a second power supply end VCC, and a second voltage supply end of the second gate drive circuit 62 is grounded. During actual application, the first gate drive circuit 61 receives the PWM signal hin output by the controller 30, and the first gate drive circuit 61 performs related processing (for example, enhancement processing) on the PWM signal hin to generate the drive signal gh. The drive signal gh is output to the control end GH of the main power transistor Q2 to control on and off of the main power transistor Q2. The second gate drive circuit 62 receives the PWM signal lin output by the controller 30, and the second gate drive circuit 62 performs related processing (for example, enhancement processing) on the PWM signal lin to generate the drive signal gl. The drive signal gl is output to the control end GL of the rectifier transistor Q1 to control on and off of the rectifier transistor Q1.

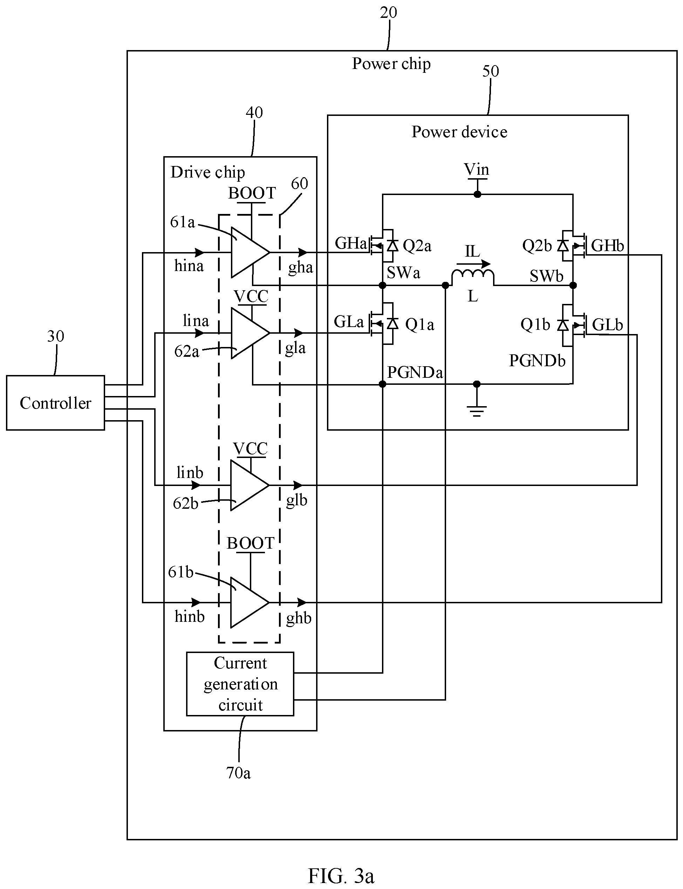

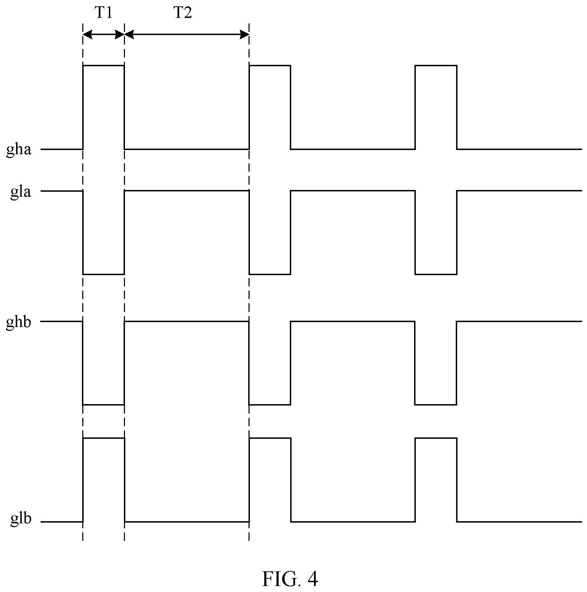

In some other examples, refer to FIG. 3a to FIG. 3c. FIG. 3a to FIG. 3c are respectively diagrams of structures of the power chip according to another embodiment of this application. Main power transistors Q2a and Q2b and rectifier transistors Q1a and Q1b may also be used in a full-bridge (H-bridge) structure. In addition, the drive circuit 60 is separately connected to a control end GHa of the main power transistor Q2a, a control end GHb of the main power transistor Q2b, a control end GLa of the rectifier transistor Q1a, and a control end GLb of the rectifier transistor Q1b. The controller 30 outputs PWM signals to the power chip 20. The power chip 20 receives PWM signals hina, hinb, lina, and linb, and inputs the PWM signals hina to linb to the drive circuit 60. The drive circuit 60 performs related processing (for example, enhancement processing) on the PWM signals hina to linb to generate drive signals gha to glb. The drive signal gha is output to the control end GHa of the main power transistor Q2a to control on and off of the main power transistor Q2a. The drive signal ghb is output to the control end GHb of the main power transistor Q2b to control on and off of the main power transistor Q2b. The drive signal gla is output to the control end GLa of the rectifier transistor Q1a to control on and off of the rectifier transistor Q1a. The drive signal glb is output to the control end GLb of the rectifier transistor Q1b to control on and off of the rectifier transistor Q1b. For example, FIG. 4 is a diagram of a signal time sequence according to another embodiment of this application. With reference to FIG. 4, in the duration T1, the drive signal gha is in the high level, which controls the main power transistor Q2a to be turned on; the drive signal gla is in the low level, which controls the rectifier transistor Q1a to be turned off; the drive signal ghb is in the low level, which controls the main power transistor Q2b to be turned off; and the drive signal glb is in the high level, which controls the rectifier transistor Q1b to be turned on. In the duration T2, the drive signal gha is in the low level, which controls the main power transistor Q2a to be turned off; the drive signal gla is in the high level, which controls the rectifier transistor Q1a to be turned on; the drive signal ghb is in the high level, which controls the main power transistor Q2b to be turned on; and the drive signal glb is in the low level, which controls the rectifier transistor Q1b to be turned on.

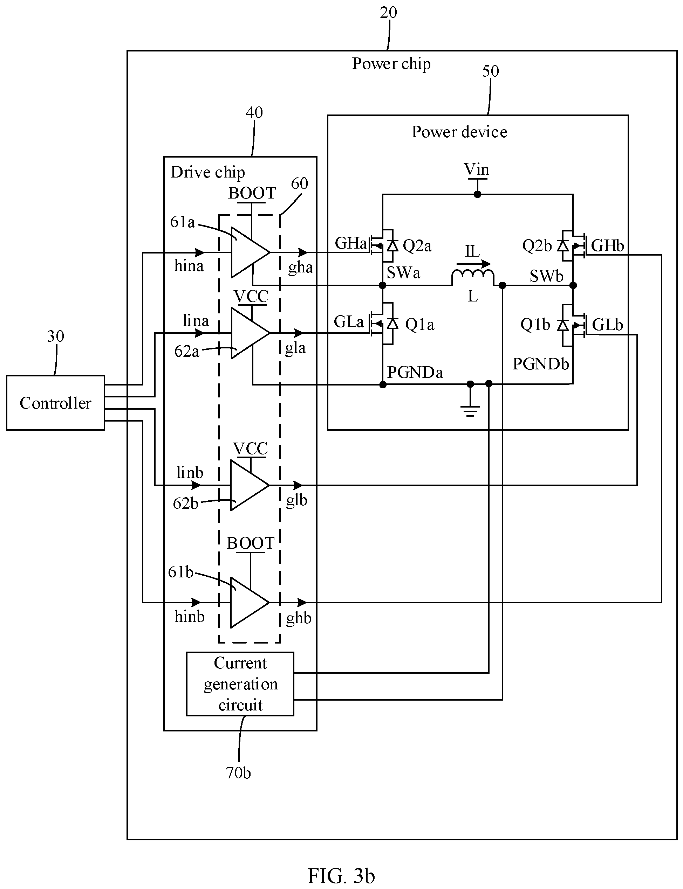

With reference to FIG. 3a and FIG. 3b, the drive circuit 60 includes a first gate drive circuit 61a, a second gate drive circuit 62a, a first gate drive circuit 61b, and a second gate drive circuit 62b. The controller 30 is separately connected to inputs of the first gate drive circuit 61a to the second gate drive circuit 62b. An output of the first gate drive circuit 61a is connected to the control end GHa of the main power transistor Q2a, an output of the second gate drive circuit 62a is connected to the control end GLa of the rectifier transistor Q1a, an output of the first gate drive circuit 61b is connected to the control end GHb of the main power transistor Q2b, and an output of the second gate drive circuit 62b is connected to the control end GLb of the rectifier transistor Q1b. A first voltage supply end of the first gate drive circuit 61a is connected to the first power supply end BOOT, and a second voltage supply end of the first gate drive circuit 61a is connected to a first end SWa of the rectifier transistor Q1a. A first voltage supply end of the second gate drive circuit 62a is connected to the second power supply end VCC, and a second voltage supply end of the second gate drive circuit 62a is grounded. A first voltage supply end of the first gate drive circuit 61b is connected to the first power supply end BOOT, and a second voltage supply end of the first gate drive circuit 61b is connected to a first end SWb of the rectifier transistor Q1b. A first voltage supply end of the second gate drive circuit 62b is connected to the second power supply end VCC, and a second voltage supply end of the second gate drive circuit 62b is grounded. During actual application, the first gate drive circuit 61a receives the PWM signal hina output by the controller 30, and the first gate drive circuit 61a performs related processing (for example, enhancement processing) on the PWM signal hina to generate the drive signal gha. The drive signal gha is output to the control end GHa of the main power transistor Q2a to control on and off of the main power transistor Q2a. The second gate drive circuit 62a receives the PWM signal lina output by the controller 30, and the second gate drive circuit 62a performs related processing (for example, enhancement processing) on the PWM signal lina to generate the drive signal gla. The drive signal gla is output to the control end GLa of the rectifier transistor Q1a to control on and off of the rectifier transistor Q1a. The first gate drive circuit 61b receives the PWM signal hinb output by the controller 30, and the first gate drive circuit 61b performs related processing (for example, enhancement processing) on the PWM signal hinb to generate the drive signal ghb. The drive signal ghb is output to the control end GHb of the main power transistor Q2b to control on and off of the main power transistor Q2b. The second gate drive circuit 62b receives the PWM signal linb output by the controller 30, and the second gate drive circuit 62b performs related processing (for example, enhancement processing) on the PWM signal linb to generate the drive signal glb. The drive signal glb is output to the control end GLb of the rectifier transistor Q1b to control on and off of the rectifier transistor Q1b.

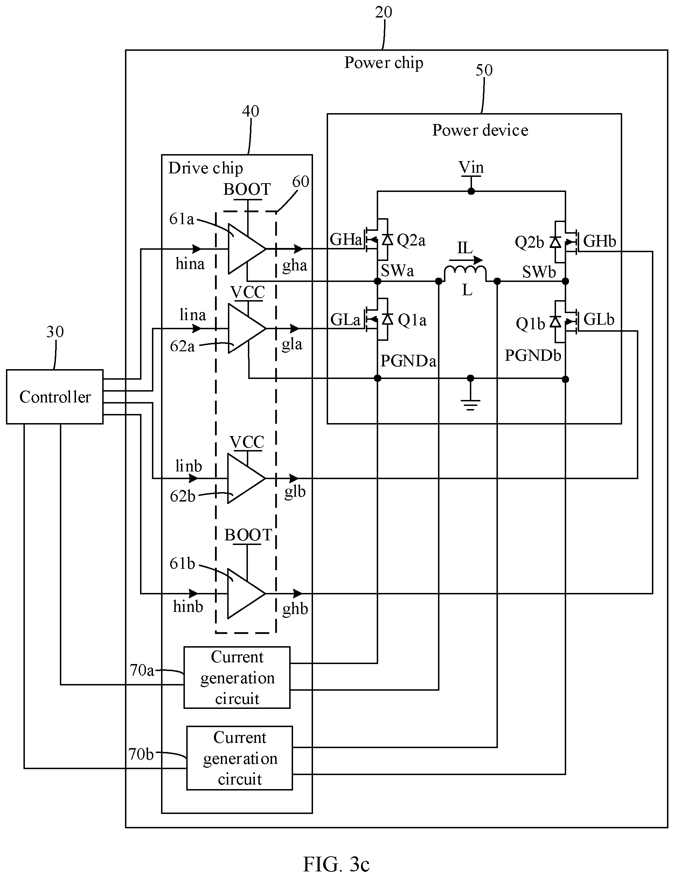

To improve control precision of the main power transistor and the rectifier transistor, in a control solution of the switching power supply, information about an inductor current may be used as an input for loop feedback, so that the drive circuit can receive a PWM signal that is regulated and controlled by the inductor current, to control on and off of the main power transistor and the rectifier transistor. However, as a switching frequency increases, on time of the main power transistor becomes shorter, which leads to inaccurate precision of direct sampling of the inductor current and affects control effect. Therefore, with reference to FIG. 2 to FIG. 3c, in this application, a current generation circuit (for example, 70 in FIG. 2, 70a in FIG. 3a, 70b in FIG. 3b, and 70a and 70b in FIG. 3c) is disposed in the drive chip 40. The current generation circuit is used to obtain a required inductor current through synthesizing, so that the required inductor current can be obtained without directly sampling a current flowing through the main power transistor, which can avoid a problem of inaccurate sampling precision caused by sampling an inductor current.

It should be noted that a main power transistor and a rectifier transistor that correspond to a current generation circuit are first connected to each other, and then are connected to a same end of the power inductor L. In addition, with reference to FIG. 2, a main power transistor and a rectifier transistor that correspond to a current generation circuit 70 may be used in the half-bridge structure. In addition, with reference to FIG. 3a to FIG. 3c, a main power transistor and a rectifier transistor that correspond to a current generation circuit may be used in the full-bridge structure. In addition, with reference to FIG. 3a, a current generation circuit 70a may be correspondingly disposed for the main power transistor Q2a and the rectifier transistor Q1a. With reference to FIG. 3b, a current generation circuit 70b may also be correspondingly disposed for the main power transistor Q2b and the rectifier transistor Q1b. With reference to FIG. 3c, a current generation circuit 70a may be correspondingly disposed for the main power transistor Q2a and the rectifier transistor Q1a, and a current generation circuit 70b may also be correspondingly disposed for the main power transistor Q2b and the rectifier transistor Q1b. The following provides detailed description by using an example in which the main power transistor and the rectifier transistor that correspond to the current generation circuit 70 are used in the half-bridge structure. For a working process in which the main power transistor and the rectifier transistor that correspond to the current generation circuit provided in this embodiment of this application are used in the full-bridge structure, refer to the following working process in which the main power transistor and the rectifier transistor are used in the half-bridge structure. Repeated details are not described.

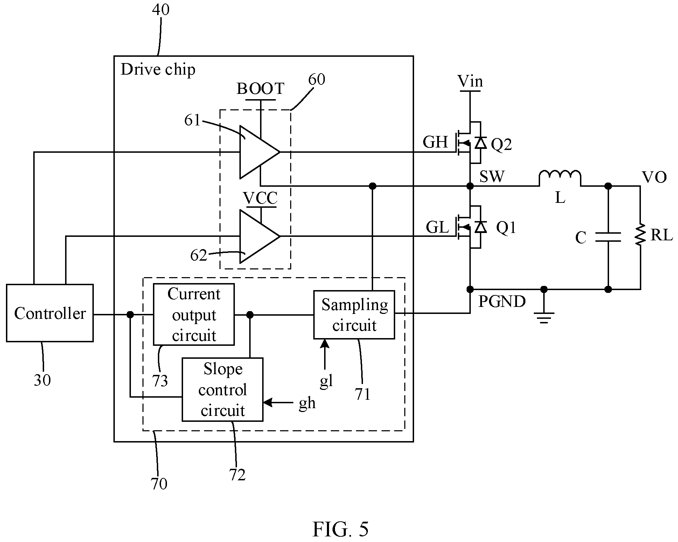

FIG. 5 is a diagram of a structure of the drive chip according to an embodiment of this application. With reference to FIG. 5, to obtain an inductor current, the current generation circuit 70 is disposed in the drive chip 40, to use the current generation circuit 70 to obtain the inductor current through synthesizing. Specifically, the current generation circuit 70 includes a sampling circuit 71, a slope control circuit 72, and a current output circuit 73. The sampling circuit 71 is connected to the rectifier transistor Q1 and the current output circuit 73, the slope control circuit 72 is connected to the current output circuit 73, and the current output circuit 73 is connected to the controller 30. The current output circuit 73 can output a sampling current of the rectifier transistor in an on duration of the rectifier transistor in each control period, and output an analog current of the main power transistor in an on duration of the main power transistor in each control period. The sampling circuit 71 can control, in the on duration of the rectifier transistor in each control period based on a current flowing through the rectifier transistor Q1, the current output circuit 73 to output the sampling current of the rectifier transistor in the on duration of the rectifier transistor. In this way, the sampling current of the rectifier transistor is obtained based on the current flowing through the rectifier transistor Q1, and the sampling current of the rectifier transistor is output to the controller 30. In addition, the slope control circuit 72 can control, based on a sampling current that is of the rectifier transistor and that is output by the current output circuit 73 in an on duration of the rectifier transistor in a k^{th} control period and a k^{th} analog current that is of the main power transistor and that is output by the current output circuit 73 in an on duration of the main power transistor in the k^{th} control period, the current output circuit 73 to output a (k+1)^{th} analog current of the main power transistor in an on duration of the main power transistor in a (k+1)^{th} control period. In this way, the (k+1)^{th} analog current of the main power transistor is obtained through simulation based on the currents output by the current output circuit 73 in the two durations: the on duration of the rectifier transistor and the on duration of the main power transistor. The (k+1)^{th} analog current of the main power transistor is output to the controller 30. After receiving the sampling current of the rectifier transistor and the (k+1)^{th} analog current of the main power transistor, the controller 30 synthesizes the sampling current of the rectifier transistor and the (k+1)^{th} analog current of the main power transistor, to form an inductor current that includes the sampling current of the rectifier transistor and the (k+1)^{th} analog current of the main power transistor. In this way, a required inductor current can be obtained without directly sampling a current flowing through the main power transistor Q2, which can avoid a problem of inaccurate sampling precision caused by sampling an inductor current. Based on this, the controller 30 can regulate and control a PWM signal based on the inductor current obtained through synthesizing, and then output, to the drive circuit 60, a PWM signal obtained after regulation and control, so that the drive circuit 60 can control, based on the PWM signal obtained after regulation and control, on and off of the main power transistor Q2 and the rectifier transistor Q1, to improve control precision of the main power transistor Q2 and the rectifier transistor Q1.

During specific application, with reference to FIG. 2 and FIG. 5, the controller 30 outputs the PWM signal hin to the first gate drive circuit 61 based on the inductor current obtained through synthesizing, so that the first gate drive circuit 61 generates the drive signal gh based on the PWM signal hin, to improve control precision of controlling on and off of the main power transistor Q2. The controller 30 also outputs the PWM signal lin to the second gate drive circuit 62 based on the inductor current obtained through synthesizing, so that the second gate drive circuit 62 generates the drive signal gl based on the PWM signal lin, to improve control precision of controlling on and off of the rectifier transistor Q1.

In addition, because the current generation circuit in this application is connected to the rectifier transistor, an inductor current can be obtained through synthesizing. Therefore, there is no need to additionally dispose, on the drive chip, a pin connected to an output voltage VO of a switching power supply 10. This is applicable to a mainstream product with a small size and a small quantity of pins, so that costs can be lower and an application scope can be wider.

Furthermore, the k^{th} analog current of the main power transistor and the sampling current of the rectifier transistor that are output in the k^{th} control period may be used as feedback parameters of the (k+1)^{th} analog current that is of the main power transistor and that is output in the (k+1)^{th} control period, which improves accuracy of the (k+1)^{th} analog current that is of the main power transistor and that is output in the (k+1)^{th} control period. In addition, the current generation circuit in this application can further adapt to a change of a duty cycle of the pulse width modulation signal (for example, the drive signal gl or gh), and fitting time of the slope of the (k+1)^{th} analog current of the main power transistor tracks on time of the main power transistor in real time.

Still with reference to FIG. 5, the sampling circuit 71 is separately connected to the first end SW and a second end PGND of the rectifier transistor Q1, and the sampling circuit 71 may be further connected to the control end GL of the rectifier transistor Q1. In this way, the sampling circuit 71 receives the drive signal gl, and can control, in response to the drive signal gl based on a current at the first end SW of the rectifier transistor Q1 and a current at the second end PGND of the rectifier transistor Q1, the current output circuit 73 to generate the sampling current of the rectifier transistor in the on duration of the rectifier transistor. In addition, the slope control circuit 72 may be further connected to the control end GH of the main power transistor Q2. In this way, the slope control circuit 72 receives the drive signal gh, and controls, in response to the drive signal gh, the current output circuit 73 to generate the (k+1)^{th} analog current of the main power transistor in the on duration of the main power transistor.

The following describes a sampling circuit, a slope control circuit, and a current output circuit in embodiments of this application with reference to specific embodiments. It may be understood that the following embodiments are intended to better explain this application, but do not limit this application.

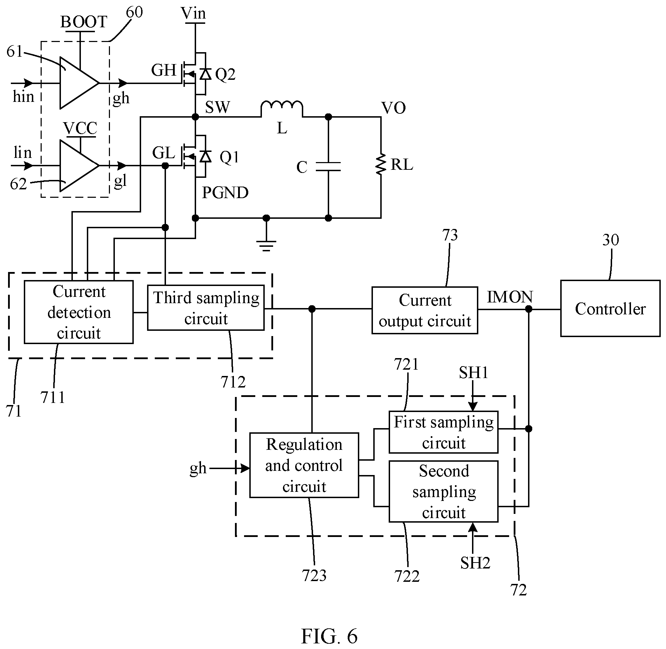

FIG. 6 is a diagram of a specific structure of the drive chip according to an embodiment of this application. With reference to FIG. 6, the sampling circuit 71 includes a current detection circuit 711 and a third sampling circuit 712. The current detection circuit 711 is separately connected to the control end GL, the first end SW, and a second end PGND of the rectifier transistor Q1. The third sampling circuit 712 is separately connected to the control end GL of the rectifier transistor Q1, the current detection circuit 711, and the current output circuit 73. During specific application, the current detection circuit 711 can generate, in response to the drive signal gl, a first control signal based on a current at the first end SW of the rectifier transistor Q1 and a current at the second end PGND of the rectifier transistor Q1 in the on duration of the rectifier transistor. The third sampling circuit 712 can also output, in response to the drive signal gl, the first control signal to the current output circuit 73 in the on duration of the rectifier transistor, to control the current output circuit 73 to generate the sampling current of the rectifier transistor in the on duration of the rectifier transistor. With the configuration, fitting time of a slope of the sampling current of the rectifier transistor can track on time of the rectifier transistor in real time.

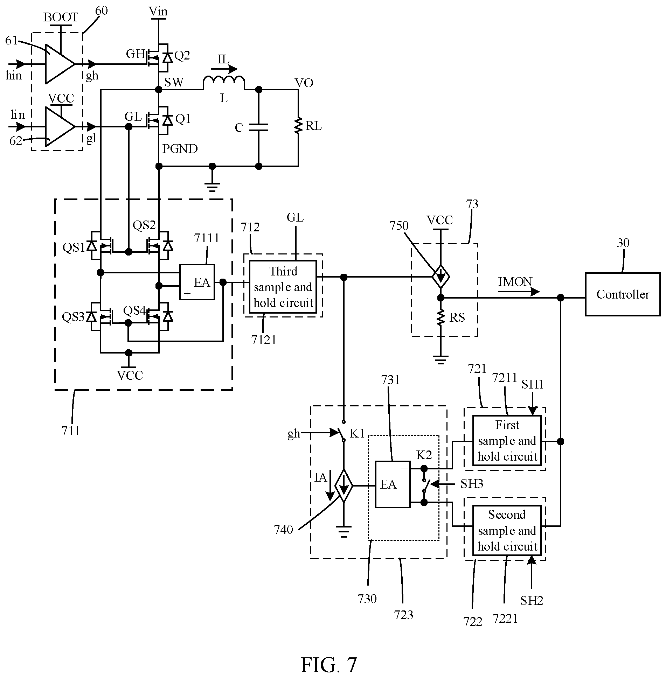

In this application, the current detection circuit 711 and the third sampling circuit 712 may be implemented by using one or more circuit structures. For example, FIG. 7 is a diagram of a specific structure of the drive chip according to another embodiment of this application. With reference to FIG. 7, the current detection circuit 711 includes a first transistor QS1, a second transistor QS2, a third transistor QS3, a fourth transistor QS4, and a second error amplifier (EA) 731. A control end of the first transistor QS1, a control end of the second transistor QS2, and the control end GL of the rectifier transistor Q1 are connected to each other. A first end of the first transistor QS1 is connected to the first end SW of the rectifier transistor Q1, and a second end of the first transistor QS1 is connected to a negative-phase input of the second error amplifier 7111. A first end of the second transistor QS2 is connected to the second end PGND of the rectifier transistor Q1, and a second end of the second transistor QS2 is connected to a positive-phase input of the second error amplifier 7111. A control end of the third transistor QS3, a control end of the fourth transistor QS4, and an output of the second error amplifier 7111 are connected to each other. A first end of the third transistor QS3 is connected to the second end of the first transistor QS1, and a second end of the third transistor QS3 is connected to the second power supply end VCC. A first end of the fourth transistor QS4 is connected to the second end of the second transistor QS2, and a second end of the fourth transistor QS4 is connected to the second power supply end VCC. The output of the second error amplifier 7111 is further connected to the third sampling circuit 712. In addition, the third sampling circuit 712 includes a third sample and hold circuit (S/H circuit) 7121. A control end of the third sample and hold circuit 7121 is connected to the control end GL of the rectifier transistor Q1, so that the third sample and hold circuit 7121 can work under control of the drive signal gl. In addition, an input of the third sample and hold circuit 7121 is connected to an output of an error amplifier in the current detection circuit 711, and an output of the third sample and hold circuit 7121 is connected to the current output circuit 73.

During specific application, the first transistor QS1 and the second transistor QS2 are turned on when the drive signal gl is in the low level. The first transistor QS1 connects the current at the first end SW of the rectifier transistor Q1 to the negative-phase input of the second error amplifier 7111, the second transistor QS2 connects the current at the second end PGND of the rectifier transistor Q1 to the positive-phase input of the second error amplifier 7111, and the output of the second error amplifier 7111 outputs the first control signal. When the drive signal gl is in the high level, an output and an input of the third sample and hold circuit are equal. In this case, the third sample and hold circuit directly outputs the first control signal to the current output circuit 73, to control the current output circuit 73 to generate the sampling current of the rectifier transistor in the on duration of the rectifier transistor. When the drive signal gl is in the low level, the first control signal is kept.

It may be understood that the current generation circuit can work in K consecutive control periods, and each control period includes the on duration of the main power transistor and the on duration of the rectifier transistor. The on duration of the main power transistor in each control period occurs before the on duration of the rectifier transistor. Herein, K is an integer greater than 1.

Still with reference to FIG. 6, the slope control circuit 72 includes a first sampling circuit 721, a second sampling circuit 722, and a regulation and control circuit 723. The first sampling circuit 721 is connected to the current output circuit 73, the second sampling circuit 722 is connected to the current output circuit 73, and the regulation and control circuit 723 is separately connected to the first sampling circuit 721, the second sampling circuit 722, and the current output circuit 73. The first sampling circuit 721 can collect a corresponding first sampling voltage when the current output circuit 73 outputs the k^{th} analog current of the main power transistor in the on duration of the main power transistor in the k^{th} control period, and output the first sampling voltage to the regulation and control circuit 723. In addition, the second sampling circuit 722 can collect a corresponding second sampling voltage when the current output circuit 73 outputs the sampling current of the rectifier transistor in the on duration of the rectifier transistor in the k^{th} control period, and output the second sampling voltage to the regulation and control circuit 723. The regulation and control circuit 723 receives the first sampling voltage and the second sampling voltage, and controls, based on the first sampling voltage and the second sampling voltage, the current output circuit 73 to output the (k+1)^{th} analog current of the main power transistor in the on duration of the main power transistor in the (k+1)^{th} control period, where 1≤k≤K. With the configuration, voltages that correspond to the k^{th} analog current of the main power transistor and the sampling current of the rectifier transistor that are output in the k^{th} control period may be used as feedback parameters of the (k+1)^{th} analog current that is of the main power transistor and that is output in the (k+1)^{th} control period, which improves accuracy of the (k+1)^{th} analog current that is of the main power transistor and that is output in the (k+1)^{th} control period.

During specific implementation, the first sampling circuit can be controlled to collect, in a first period of the on duration of the main power transistor, the (k+1)^{th} analog current that is of the main power transistor and that is output by the current output circuit, convert the collected current into the first sampling voltage, and directly output the first sampling voltage in the first period. In addition, the first sampling circuit is further controlled to keep outputting the first sampling voltage in the on duration of the rectifier transistor. The first period is a time period from a first reference moment to an end moment that are of the on duration of the main power transistor. During actual application, a first pulse control signal is input to the first sampling circuit to control the first sampling circuit. Specifically, when the first pulse control signal is in the first level, the first sampling circuit is controlled to collect the (k+1)^{th} analog current that is of the main power transistor and that is output by the current output circuit, convert the collected current into the first sampling voltage, and output the first sampling voltage. When the first pulse control signal is in the second level, outputting the first sampling voltage is kept. A time period in which the first pulse control signal is in the first level is used as the first period.

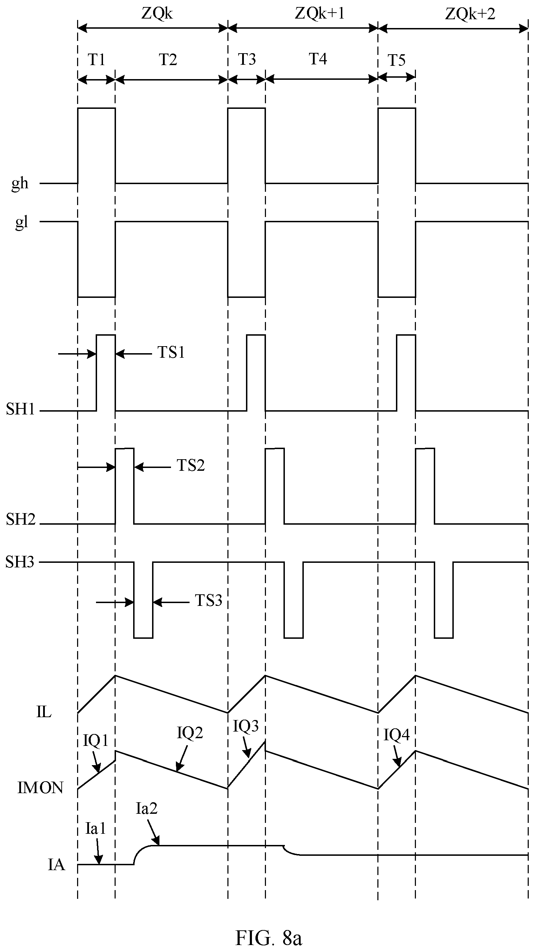

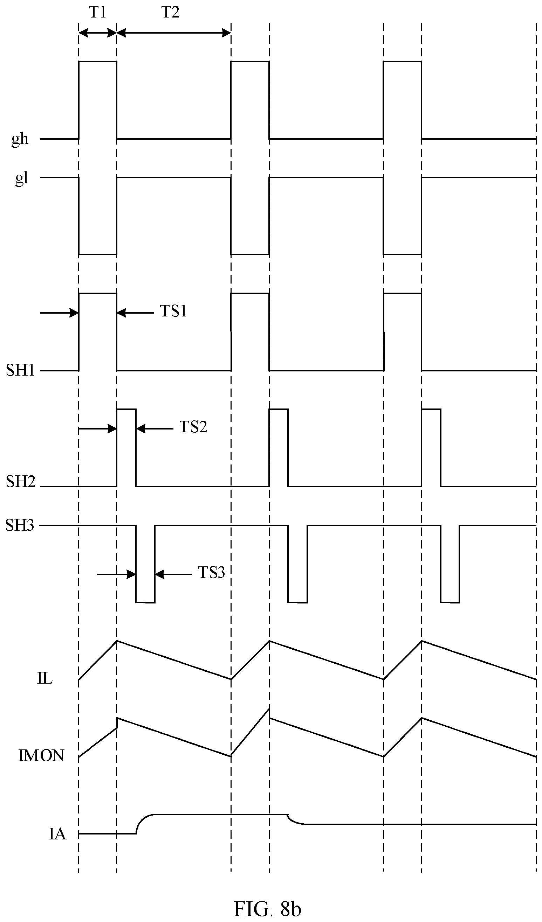

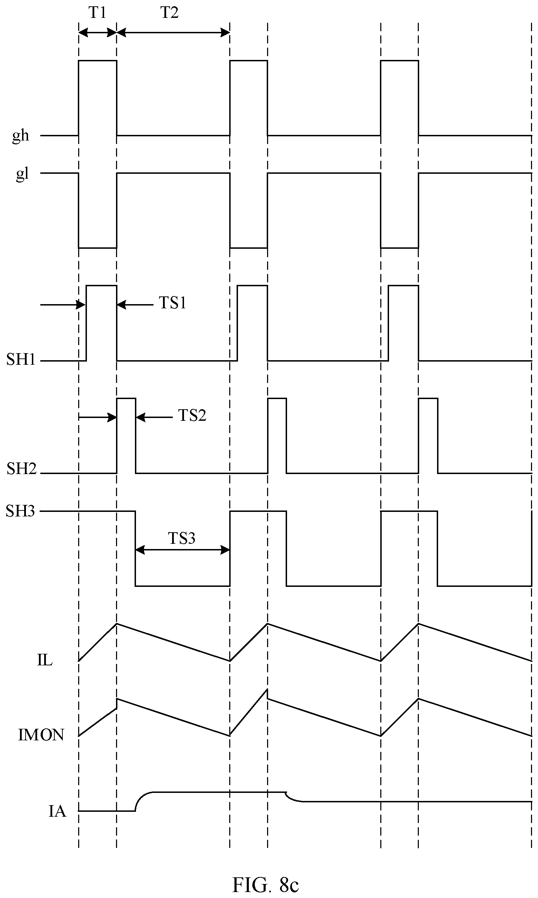

In some examples, the first reference moment of the first period may be enabled to be close to the end moment of the on duration of the main power transistor, so that the first sampling voltage is collected in a time period that is of the on duration of the main power transistor and that is about to end. The first reference moment is a moment from a start moment to the end moment of the on duration of the main power transistor, so that a part of a time period of the on duration of the main power transistor is set as the first period. For example, FIG. 8a is a diagram of a signal time sequence according to another embodiment of this application. With reference to FIG. 8a, the first level being the high level, the second level being the low level, and the duration T1 are used as an example. A moment in which a rising edge corresponding to a high level of a first pulse control signal SH1 is located is the first reference moment, and a moment in which a falling edge corresponding to the high level of the first pulse control signal SH1 is located is the end moment of the on duration of the main power transistor. The first reference moment is enabled to be close to the end moment of the on duration of the main power transistor, so that a time period TS1 close to the end moment of the on duration of the main power transistor is set as the first period. Alternatively, for example, FIG. 8c is a diagram of a signal time sequence according to another embodiment of this application. With reference to FIG. 8c, the first reference moment is enabled to be close to the start moment of the on duration of the main power transistor, so that most of the time period TS1 of the on duration of the main power transistor is set as the first period. Alternatively, because time of the on duration of the main power transistor is short, the first reference moment may be set to the start moment of the on duration of the main power transistor, so that the first sampling voltage is collected in the entire on duration of the main power transistor, which improves accuracy of the first sampling voltage. For example, FIG. 8b is a diagram of a signal time sequence according to another embodiment of this application. With reference to FIG. 8b, the first reference moment is aligned with the start moment of the on duration of the main power transistor, so that the entire on duration of the main power transistor is set as the first period. It may be understood that the foregoing description is provided by using an example in which the first level is the high level and the second level is the low level. During actual application, the first level may be the low level, and the second level may be the high level.

In this application, the first sampling circuit 721 may be implemented by using one or more circuit structures. For example, with reference to FIG. 7, the first sampling circuit 721 includes a first sample and hold circuit (S/H circuit) 7211. A control end of the first sample and hold circuit 7211 is configured to receive the first pulse control signal SH1, so that the first sample and hold circuit 7211 can work under control of the first pulse control signal SH1. In addition, an input of the first sample and hold circuit 7211 is connected to an output of the current output circuit 73, and an output of the first sample and hold circuit 7211 is connected to the regulation and control circuit 723.

During specific implementation, the second sampling circuit is controlled to collect, in a second period of the on duration of the rectifier transistor, the sampling current that is of the rectifier transistor and that is output by the current output circuit, convert the collected current into the second sampling voltage, and directly output the second sampling voltage in the second period. The second sampling circuit is further controlled to keep outputting the second sampling voltage in the on duration of the main power transistor. The second period is a time period from a start moment to a second reference moment that are of the on duration of the rectifier transistor. During actual application, a second pulse control signal is input to the second sampling circuit. When the second pulse control signal is in the first level, the second sampling circuit is controlled to collect the sampling current that is of the rectifier transistor and that is output by the current output circuit, convert the collected current into the second sampling voltage, and then output the second sampling voltage. When the second pulse control signal is in the second level, outputting the second sampling voltage is kept. A time period in which the second pulse control signal is in the first level is used as the second period.

In some examples, the second reference moment of the second period may be enabled to be close to the start moment of the on duration of the rectifier transistor, to collect the second sampling voltage in a time period that just starts in the on duration of the rectifier transistor. The second reference moment is a moment from the start moment to an end moment of the on duration of the rectifier transistor, so that a part of a time period of the on duration of the rectifier transistor is set as the second period. In addition, the second sampling circuit 722 further needs to be controlled to keep outputting the second sampling voltage in a period other than the second period in the on duration of the rectifier transistor. For example, with reference to FIG. 8a and FIG. 8b, a moment in which a rising edge corresponding to a high level of a second pulse control signal SH2 is located is the start moment of the on duration of the rectifier transistor, and a moment in which a falling edge corresponding to the high level of the second pulse control signal SH2 is located is the second reference moment. The second reference moment is enabled to be close to the start moment of the on duration of the rectifier transistor, so that a time period TS2 close to the start moment of the on duration of the rectifier transistor is the second period.

It may be understood that the first period and the second period may be the same, or the first period is greater than the second period, or the first period is less than the second period. This is not limited herein.

In this application, the second sampling circuit 722 may also be implemented by using one or more circuit structures. For example, with reference to FIG. 7, the second sampling circuit 722 includes a second sample and hold circuit (S/H circuit) 7221. A control end of the second sample and hold circuit 7221 is configured to receive the second pulse control signal SH2, so that the second sample and hold circuit 7221 can work under control of the second pulse control signal SH2. In addition, an input of the second sample and hold circuit 7221 is connected to an output of the current output circuit 73, and an output of the second sample and hold circuit 7221 is connected to the regulation and control circuit 723.

In this application, the regulation and control circuit 723 may be implemented by using one or more circuit structures. For example, with reference to FIG. 7, the regulation and control circuit 723 includes a regulation and generation circuit 730, a first switch K1, and a first controlled current source 740. The regulation and generation circuit 730 is connected to the first sampling circuit 721 and the second sampling circuit 722. A first end of the first switch K1 is connected to a first end of the first controlled current source 740, and a second end of the first switch K1 is connected to the current output circuit 73. That is, the first controlled current source 740 is connected to the current output circuit 73 via the first switch K1, a second end of the first controlled current source 740 is grounded, and a control end of the first controlled current source 740 is connected to the regulation and generation circuit 730. During specific application, the regulation and generation circuit 730 can receive the first sampling voltage and the second sampling voltage, and generate a regulation and generation signal based on the first sampling voltage and the second sampling voltage. The regulation and generation signal is input to the control end of the first controlled current source 740, so that the first controlled current source 740 can be controlled to generate a first current. In addition, the first switch K1 is in an on state in the on duration of the main power transistor, and the first controlled current source 740 is connected to the current output circuit 73, so that the first current can be output to the current output circuit 73 in the on duration of the main power transistor, to control the current output circuit 73 to generate the (k+1)^{th} analog current of the main power transistor by using the first current. With the configuration, the fitting time of the slope of the (k+1)^{th} analog current of the main power transistor can track the on time of the main power transistor in real time.

If the first controlled current source 740 is set as a voltage controlled current source (VCCS), the regulation and generation circuit 730 outputs a control voltage to the control end of the first controlled current source 740, so that the first controlled current source 740 is controlled to generate the first current, and the first current can change with a change of the control voltage. For example, the first current increases as the control voltage increases. Alternatively, the first controlled current source 740 may be formed in a current mirror structure. This is not limited herein.

With reference to FIG. 7, the regulation and generation circuit 730 includes a first error amplifier (EA) 731. A negative-phase input of the first error amplifier 731 is connected to the first sampling circuit 721, a positive-phase input of the first error amplifier 731 is connected to the second sampling circuit 722, and an output of the first error amplifier 731 is connected to the control end of the first controlled current source 740. During actual application, the negative-phase input of the first error amplifier 731 receives the first sampling voltage output by the first sampling circuit 721, and the positive-phase input of the first error amplifier 731 receives the second sampling voltage output by the second sampling circuit 722, to output the control voltage based on the first sampling voltage and the second sampling voltage. For example, a voltage value of the output control voltage changes based on a value relationship between the first sampling voltage and the second sampling voltage.

Further, with reference to FIG. 7, the regulation and generation circuit 730 further includes a second switch K2. The second switch K2 is connected between the negative-phase input of the first error amplifier 731 and the positive-phase input of the first error amplifier 731. During actual application, the second switch K2 is turned on in a third period. The third period is a period other than the second period in the on duration of the rectifier transistor. For example, with reference to FIG. 8a to FIG. 8c, a control end of the second switch K2 receives a third pulse control signal SH3, and the second switch K2 is turned on when the third pulse control signal SH3 is in the second level (for example, the low level), so that the negative-phase input is connected to the positive-phase input of the first error amplifier 731. In addition, the second switch K2 is turned off when the third pulse control signal SH3 is in the first level (for example, the high level), which disconnects the negative-phase input and the positive-phase input of the first error amplifier 731. That is, a period in which the third pulse control signal SH3 is in the second level is the third period. For example, an example in which the second level of the third pulse control signal SH3 is the low level, and the first level of the third pulse control signal SH3 is the high level is used as an example. With reference to FIG. 8a to FIG. 8c, the third pulse control signal SH3 is in the low level in a third period TS3. For example, with reference to FIG. 8a and FIG. 8b, a falling edge of the third pulse control signal SH3 is aligned with the falling edge of the second pulse control signal SH2, and a rising edge of the third pulse control signal SH3 has a specific time interval with the end moment of the on duration of the rectifier transistor. That is, the second period TS2 ends, and the third period TS3 starts. Alternatively, with reference to FIG. 8c, the falling edge of the third pulse control signal SH3 is aligned with the falling edge of the second pulse control signal SH2, and the rising edge of the third pulse control signal SH3 is aligned with the end moment of the on duration of the rectifier transistor. In addition, the third period may be the same as the second period, or the third period is greater than the second period.

Still with reference to FIG. 7, the current output circuit 73 includes a second controlled current source 750. A control end of the second controlled current source 750 is connected to the sampling circuit 71 and the slope control circuit 72, a first end of the second controlled current source 750 is connected to the second power supply end VCC, and a second end of the second controlled current source 750 is connected to the controller 30. Further, the current output circuit 73 further includes a voltage divider resistor RS, and the second end of the second controlled current source 750 is grounded via the voltage divider resistor RS. Based on this, the sampling circuit 71 may also be enabled to input a voltage to the control end of the second controlled current source 750, so that the second controlled current source 750 can be controlled to output, in response to a voltage that is generated to the control end of the second controlled current source 750 through control over the sampling circuit 71, the sampling current of the rectifier transistor in the on duration of the rectifier transistor. In addition, the slope control circuit 72 inputs a current to the control end of the second controlled current source 750, and regulates and controls a voltage at the control end of the second controlled current source 750 based on the current, so that the second controlled current source 750 can output, in response to a voltage that is generated to the control end of the second controlled current source 750 through control over the slope control circuit 72, the (k+1)^{th} analog current of the main power transistor in the on duration of the main power transistor.

The second controlled current source is also set to the VCCS. In this way, the second controlled current source 750 generates the sampling current of the rectifier transistor based on the voltage input by the sampling circuit 71 to the control end of the second controlled current source 750. In addition, the voltage at the control end of the second controlled current source 750 is adjusted based on the current input by the slope control circuit 72 to the control end of the second controlled current source 750, so that the second controlled current source 750 generates the (k+1)^{th} analog current of the main power transistor. The (k+1)^{th} analog current of the main power transistor changes with a change of a voltage at the control end of the second controlled current source. For example, when the voltage at the control end of the second controlled current source 750 decreases, the second controlled current source 750 can generate a (k+1)^{th} analog current that is of the main power transistor and whose current value increases, and enable a slope of the (k+1)^{th} analog current of the main power transistor to increase. Alternatively, the second controlled current source 750 may be formed in a current mirror structure. This is not limited herein.

The following uses the structure shown in FIG. 7 as an example to describe, with reference to FIG. 8a, a working process of the current generation circuit provided in embodiments of this application. For a working process of the current generation circuit provided in embodiments of this application with reference to FIG. 8b and FIG. 8c, refer to the following described working process. Repeated details are not described. In addition, IL represents an actual current flowing through a power inductor, IA represents a current generated by the first controlled current source 740, and IMON represents an inductor current output by the current generation circuit 70. In addition, IMON is obtained by synthesizing the analog current of the main power transistor in the on duration of the main power transistor and the sampling current of the rectifier transistor in the on duration of the rectifier transistor. ZQk represents the k^{th} control period. The k^{th} control period ZQk includes the on duration T1 of the main power transistor and the on duration T2 of the rectifier transistor. A k^{th} analog current IQ1 of the main power transistor is output in the on duration T1 of the main power transistor. ZQk+1 represents the (k+1)^{th} control period. The (k+1)^{th} control period ZQk+1 includes an on duration T3 of the main power transistor and an on duration T4 of the rectifier transistor. A (k+1)^{th} analog current IQ3 of the main power transistor is output in the on duration T3 of the main power transistor. ZQk+2 represents the (k+2)^{th} control period. The (k+2)^{th} control period ZQk+2 includes an on duration T5 of the main power transistor and the on duration of the rectifier transistor. A (k+2)^{th} analog current IQ4 of the main power transistor is output in the on duration T5 of the main power transistor.

In the on duration T1 of the main power transistor, the main power transistor Q2 is turned on, and the rectifier transistor Q1 is turned off. The current IA of a current value Ia1 is applied to the control end of the second controlled current source 750 to discharge the voltage at the control end of the second controlled current source 750, to decrease the voltage at the control end of the second controlled current source 750, and the second controlled current source 750 can generate a k^{th} analog current IQ1 that is of the main power transistor and whose current value increases. The first sample and hold circuit 7211 collects the k^{th} analog current IQ1 of the main power transistor at a moment close to an end moment when the main power transistor Q2 is turned on to obtain the first sampling voltage, and outputs the first sampling voltage.

In the on duration T2 of the rectifier transistor, the main power transistor Q2 is turned off, and the rectifier transistor Q1 is turned on. The first transistor QS1 and the second transistor QS2 respectively input the current at the first end SW of the rectifier transistor Q1 and the current at the second end PGND of the rectifier transistor Q1 to the second error amplifier 7111, so that the second error amplifier 7111 outputs the first control signal. The third sample and hold circuit outputs the first control signal to the control end of the second controlled current source 750, so that the second controlled current source 750 outputs a sampling current IQ2 of the rectifier transistor in response to a voltage of the first control signal. The second sample and hold circuit 7221 collects the sampling current IQ2 of the rectifier transistor at a moment close to a start moment when the rectifier transistor Q1 is turned on to obtain the second sampling voltage, and outputs the second sampling voltage. Then, the second switch K2 is turned off under control of the third pulse control signal SH3. The first sampling voltage is input to the negative-phase input of the first error amplifier 731, and the second sampling voltage is input to the positive-phase input of the first error amplifier 731. When the first sampling voltage is lower than the second sampling voltage, it indicates that a slope of the k^{th} analog current IQ1 of the main power transistor is low, which causes the first error amplifier 731 to output a control voltage V1 with an increased voltage. The first controlled current source 740 is controlled by the control voltage V1, to adjust a current value of the current IA output by the first controlled current source 740 (for example, the current value of the current IA is increased from Ia1 to Ia2). Then, the second switch K2 is turned on under control of the third pulse control signal SH3. The first error amplifier 731 keeps outputting the control voltage V1, and the current value of the current IA output by the first controlled current source 740 remains Ia2.

In the on duration T3 of the main power transistor, the main power transistor Q2 is turned on, and the rectifier transistor Q1 is turned off. The control end of the second controlled current source 750 is connected to the first controlled current source 740, and a current IA that is of a current value Ia2 and that is output by the first controlled current source 740 is applied to the control end of the second controlled current source 750 to discharge the voltage at the control end of the second controlled current source 750, to decrease the voltage at the control end of the second controlled current source 750, and the second controlled current source 750 can generate the (k+1)^{th} analog current IQ3 that is of the main power transistor and whose current value increases. In addition, compared with the k^{th} analog current IQ1 of the main power transistor, this enables a slope of the (k+1)^{th} analog current IQ3 of the main power transistor to increase.

In the on duration T4 of the rectifier transistor, the main power transistor Q2 is turned off, and the rectifier transistor Q1 is turned on. The first transistor QS1 and the second transistor QS2 respectively input the current at the first end SW of the rectifier transistor Q1 and the current at the second end PGND of the rectifier transistor Q1 to the second error amplifier 7111, so that the second error amplifier 7111 outputs the first control signal. The third sample and hold circuit outputs the first control signal to the control end of the second controlled current source 750, so that the second controlled current source 750 outputs the sampling current IQ2 of the rectifier transistor in response to a voltage of the first control signal. The second sample and hold circuit 7221 collects the sampling current IQ2 of the rectifier transistor at a moment close to a start moment when the rectifier transistor Q1 is turned on to obtain the second sampling voltage, and outputs the second sampling voltage. Then, the second switch K2 is turned off under control of the third pulse control signal SH3. The first sampling voltage is input to the negative-phase input of the first error amplifier 731, and the second sampling voltage is input to the positive-phase input of the first error amplifier 731. When the first sampling voltage is higher than the second sampling voltage, it indicates that a slope of the (k+1)^{th} analog current IQ3 of the main power transistor is high, which causes the first error amplifier 731 to output a control voltage V2 with a decreased voltage. The first controlled current source 740 is controlled by the control voltage V2, to adjust a current value of the current IA output by the first controlled current source 740 (for example, the current value of the current IA is decreased from Ia2 to Ia3). Then, the second switch K2 is turned on under control of the third pulse control signal SH3. The first error amplifier 731 keeps outputting the control voltage V2, and the current value of the current IA output by the first controlled current source 740 remains Ia3.

In the on duration T5 of the main power transistor, the main power transistor Q2 is turned on, and the rectifier transistor Q1 is turned off. The control end of the second controlled current source 750 is connected to the first controlled current source 740, and a current IA that is of a current value Ia3 and that is output by the first controlled current source 740 is applied to the control end of the second controlled current source 750 to discharge the voltage at the control end of the second controlled current source 750, to decrease the voltage at the control end of the second controlled current source 750, and the second controlled current source 750 can generate the (k+2)^{th} analog current IQ4 that is of the main power transistor and whose current value increases. In addition, compared with the (k+1)^{th} analog current IQ3 of the main power transistor, this enables a slope of the (k+2)^{th} analog current IQ4 of the main power transistor to decrease.

Processes of other durations may be deduced by analogy. Details are not described herein again.

Based on the foregoing description, according to the current generation circuit in embodiments of this application, a slope of the analog current of the main power transistor automatically changes with a change of an inductance value of a power inductor, so that an inductor current output by the current generation circuit can adapt to the change of the inductance value of the power inductor. Furthermore, the current generation circuit in this application can further adapt to a change of a duty cycle of the drive signal gl or gh, and fitting time of the slope of the analog current of the main power transistor tracks on time of the main power transistor in real time.

In addition, the control end of the second controlled current source is temporarily charged and discharged, to dynamically adjust the current output by the second controlled current source. This can improve a control speed, is more applicable to a high-speed scenario, and can further reduce power consumption and reduce an area occupied by the entire current generation circuit.

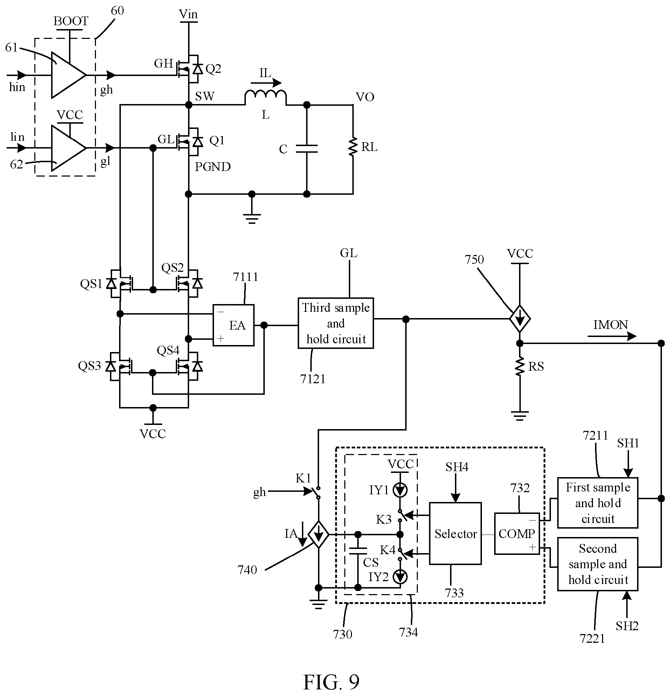

FIG. 9 is a diagram of a specific structure of the drive chip according to another embodiment of this application. In this embodiment, the implementations in the foregoing embodiments are changed. The following describes only differences between this embodiment and the foregoing embodiments, and similarities are not described herein. With reference to FIG. 9, the regulation and generation circuit 730 includes a comparator (COMP) 732, a selector 733, and a signal generator 734. A negative-phase input of the comparator 732 is connected to the first sampling circuit 721, a positive-phase input of the comparator 732 is connected to the second sampling circuit 722, and an output of the comparator 732 is connected to a first input of the selector 733. A second input of the selector 733 is configured to receive a selection trigger signal SH4, a first output of the selector 733 is connected to a first control end of the signal generator 734, and a second output of the selector 733 is connected to a second control end of the signal generator 734. An output of the signal generator 734 is connected to the control end of the first controlled current source 740. During actual application, the negative-phase input of the comparator 732 receives the first sampling voltage, and the positive-phase input of the comparator 732 receives the second sampling voltage, to output, based on the first sampling voltage and the second sampling voltage, a selection control signal that is used as a voltage signal. In addition, the selector 733 can receive the selection control signal and the selection trigger signal SH4, to control, in response to the selection control signal and the selection trigger signal, the signal generator 734 to output the control voltage based on a first reference current or a second reference current.

For example, the selection trigger signal is in the first level (for example, a high level). If the selection control signal is in the first level (for example, a high level), the selector may control the signal generator to output the first reference current to the control end of the first controlled current source, so that the control end of the first controlled current source is charged, and the control voltage at the control end of the first controlled current source increases; and if the selection control signal is in the second level (for example, a low level), the selector may control the signal generator to output the second reference current to the control end of the first controlled current source, so that the control end of the first controlled current source is discharged, to decrease the control voltage at the control end of the first controlled current source. In addition, if the selection trigger signal is in the second level (for example, a low level), the selector does not control outputting of the signal generator.

Further, with reference to FIG. 9, the regulation and generation circuit 730 includes a third switch K3, a fourth switch K4, a first current source IY1, a second current source IY2, and a storage capacitor CS. A first end of the first current source IY1 is connected to a first reference signal end, and a second end of the first current source IY1 is connected to a first end of the third switch K3. A second end of the third switch K3 is connected to the control end of the first controlled current source 740, and a control end of the third switch K3 is connected to the first output of the selector 733. A first end of the fourth switch K4 is connected to the control end of the first controlled current source 740, a second end of the fourth switch K4 is connected to a first end of the second current source IY2, and a control end of the fourth switch K4 is connected to the second output of the selector 733. A second end of the second current source IY2 is connected to a second reference signal end. A first end of the storage capacitor CS is connected to the control end of the first controlled current source 740, and a second end of the storage capacitor CS is connected to the second reference signal end. In addition, the first current source IY1 is configured to output the first reference current, and the second current source IY2 is configured to output the second reference current. During specific application, the selector 733 controls the third switch K3 to be turned on, the first current source IY1 outputs the first reference current to the storage capacitor CS, so that the storage capacitor CS is charged. A voltage obtained after the storage capacitor CS is charged is used as the control voltage and is output to the control end of the first controlled current source 740, to increase the voltage at the control end of the first controlled current source 740. The selector 733 controls the fourth switch K4 to be turned on, the second current source IY2 outputs the second reference current to the storage capacitor CS, so that the storage capacitor CS is discharged. A voltage obtained after the storage capacitor CS is discharged is used as the control voltage and is output to the control end of the first controlled current source 740, to decrease the voltage at the control end of the first controlled current source 740. In addition, a voltage at the first reference signal end is higher than a voltage at the second reference signal end. For example, the first reference signal end may be the second power supply end VCC, and the second reference signal end may be grounded.

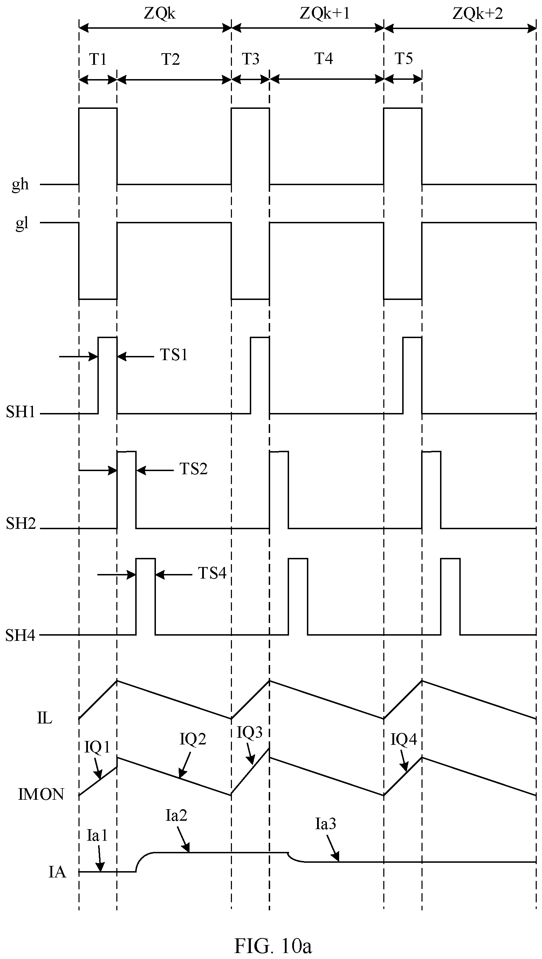

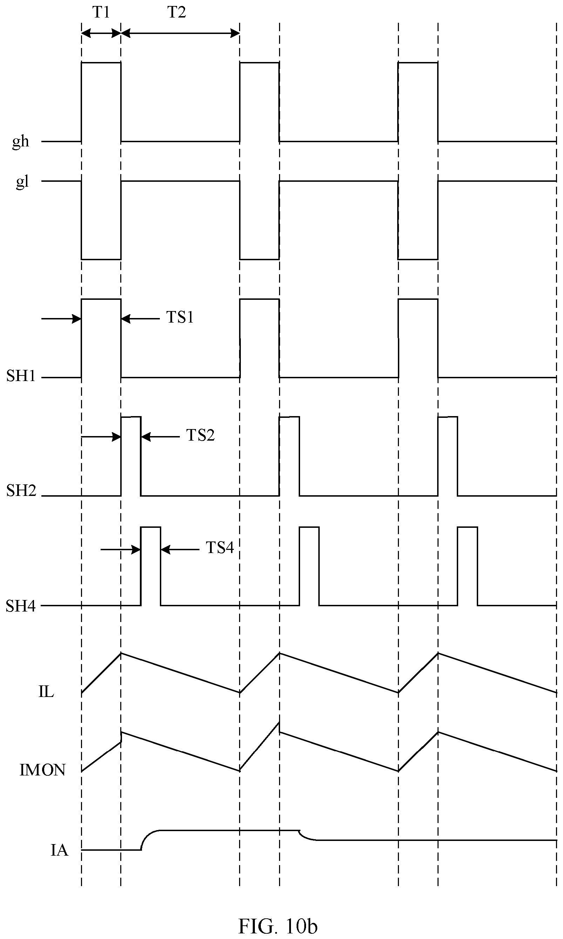

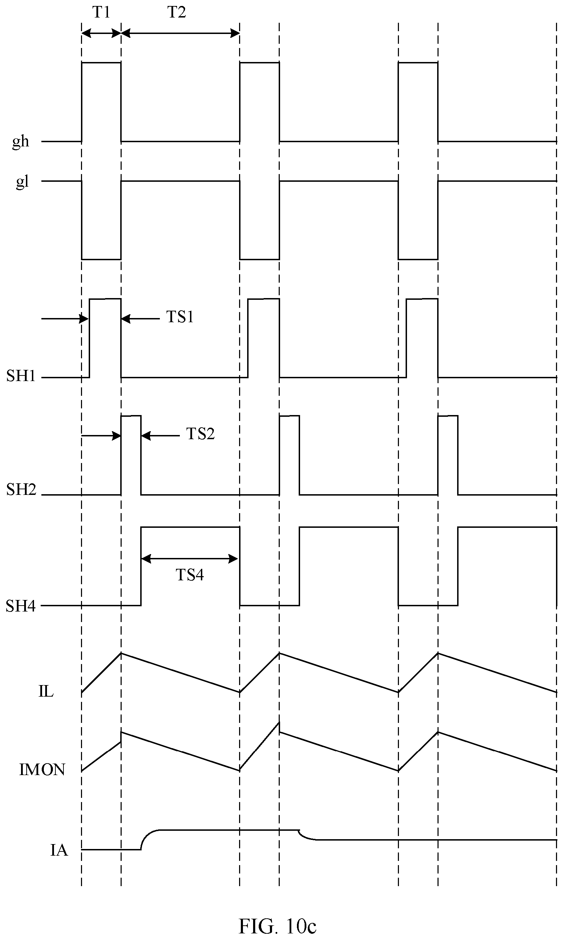

During actual application, an example in which a first level of the selection trigger signal SH4 is the high level, and a second level of the selection trigger signal SH4 is the low level is used, and the selection trigger signal SH4 is in the high level in the fourth period TS4. For example, with reference to FIG. 10a and FIG. 10b, a rising edge of the selection trigger signal SH4 is aligned with the falling edge of the second pulse control signal SH2, and a falling edge of the selection trigger signal SH4 has a specific interval with the end moment of the on duration of the rectifier transistor. That is, the second period TS2 ends, and the third period TS3 starts. Alternatively, with reference to FIG. 10c, the rising edge of the selection trigger signal SH4 is aligned with the falling edge of the second pulse control signal SH2, and the falling edge of the selection trigger signal SH4 is aligned with the end moment of the on duration of the rectifier transistor. In addition, the fourth period may be the same as the second period, or the fourth period is greater than the second period.

The following uses the structure shown in FIG. 9 as an example to describe, with reference to FIG. 10a, a working process of the current generation circuit provided in embodiments of this application. For a working process of the current generation circuit provided in embodiments of this application with reference to FIG. 10b and FIG. 10c, refer to the following described working process. Repeated details are not described. In addition, IL represents an actual current flowing through a power inductor, IA represents a current generated by the first controlled current source 740, and IMON represents an inductor current output by the current generation circuit 70. In addition, IMON is obtained by synthesizing the analog current of the main power transistor in the on duration of the main power transistor and the sampling current of the rectifier transistor in the on duration of the rectifier transistor. ZQk represents the k^{th} control period. The k^{th} control period ZQk includes the on duration T1 of the main power transistor and the on duration T2 of the rectifier transistor. A k^{th} analog current IQ1 of the main power transistor is output in the on duration T1 of the main power transistor. ZQk+1 represents the (k+1)^{th} control period. The (k+1)^{th} control period ZQk+1 includes an on duration T3 of the main power transistor and an on duration T4 of the rectifier transistor. A (k+1)^{th} analog current IQ3 of the main power transistor is output in the on duration T3 of the main power transistor. ZQk+2 represents the (k+2)^{th} control period. The (k+2)^{th} control period ZQk+2 includes an on duration T5 of the main power transistor and the on duration of the rectifier transistor. A (k+2)^{th} analog current IQ4 of the main power transistor is output in the on duration T5 of the main power transistor.

In the on duration T1 of the main power transistor, a process is basically the same as that in the foregoing embodiment. Details are not described herein again.

In the on duration T2 of the rectifier transistor, the main power transistor Q2 is turned off, and the rectifier transistor Q1 is turned on. The first transistor QS1 and the second transistor QS2 respectively input the current at the first end SW of the rectifier transistor Q1 and the current at the second end PGND of the rectifier transistor Q1 to the second error amplifier 7111, so that the second error amplifier 7111 outputs the first control signal. The third sample and hold circuit 7121 outputs the first control signal to the control end of the second controlled current source 750, so that the second controlled current source 750 outputs a sampling current IQ2 of the rectifier transistor in response to a voltage of the first control signal. The second sample and hold circuit 7221 collects the sampling current IQ2 of the rectifier transistor at a moment close to a start moment when the rectifier transistor Q1 is turned on to obtain the second sampling voltage, and outputs the second sampling voltage. The comparator 732 receives the first sampling voltage and the second sampling voltage, and outputs the selection control signal based on the first sampling voltage and the second sampling voltage. When the first sampling voltage is lower than the second sampling voltage, it indicates that a slope of the k^{th} analog current IQ1 of the main power transistor is low, and the selection control signal output by the comparator 732 is in the high level. When the selection trigger signal SH3 is in the high level, the selector 733 controls the third switch K3 to be turned on, and the first current source IY1 outputs the first reference current to the storage capacitor CS, to charge the storage capacitor CS, and output a control voltage, to increase the voltage at the control end of the first controlled current source 740. The first controlled current source 740 is controlled by the control voltage, to adjust a current value of the current IA output by the first controlled current source 740 (for example, the current value of the current IA is increased from Ia1 to Ia2). Then, the selection trigger signal SH3 is in the low level, and the current value of the current IA output by the first controlled current source 740 remains Ia2.

In the on duration T3 of the main power transistor, a process is basically the same as that in the foregoing embodiment. Details are not described herein again.

In the on duration T4 of the rectifier transistor, the main power transistor Q2 is turned off, and the rectifier transistor Q1 is turned on. The first transistor QS1 and the second transistor QS2 respectively input the current at the first end SW of the rectifier transistor Q1 and the current at the second end PGND of the rectifier transistor Q1 to the second error amplifier 7111, so that the second error amplifier 7111 outputs the first control signal. The third sample and hold circuit 7121 outputs the first control signal to the control end of the second controlled current source 750, so that the second controlled current source 750 outputs the sampling current IQ2 of the rectifier transistor. The second sample and hold circuit 7221 collects the sampling current IQ2 of the rectifier transistor at a moment close to a start moment when the rectifier transistor Q1 is turned on to obtain the second sampling voltage, and outputs the second sampling voltage. The comparator 732 receives the first sampling voltage and the second sampling voltage, and outputs the selection control signal based on the first sampling voltage and the second sampling voltage. When the first sampling voltage is higher than the second sampling voltage, it indicates that a slope of the (k+1)^{th} analog current IQ3 of the main power transistor is high, and the selection control signal output by the comparator 732 is in the low level. When the selection trigger signal SH3 is in the high level, the selector 733 controls the fourth switch K4 to be turned on, and the second current source IY2 outputs the second reference current to the storage capacitor CS, to discharge the storage capacitor CS, and output a control voltage, to decrease the voltage at the control end of the first controlled current source 740. The first controlled current source 740 is controlled by the control voltage, to adjust a current value of the current IA output by the first controlled current source 740 (for example, the current value of the current IA is decreased from Ia2 to Ia3). Then, the selection trigger signal SH3 is in the low level, and the current value of the current IA output by the first controlled current source 740 remains Ia3.

In the on duration T5 of the main power transistor, the main power transistor Q2 is turned on, and the rectifier transistor Q1 is turned off. The control end of the second controlled current source 750 is connected to the first controlled current source 740, and a current IA that is of a current value Ia3 and that is output by the first controlled current source 740 is applied to the control end of the second controlled current source 750 to discharge the voltage at the control end of the second controlled current source 750, to decrease the voltage at the control end of the second controlled current source 750, and the second controlled current source 750 can generate the (k+2)^{th} analog current IQ4 that is of the main power transistor and whose current value increases. In addition, compared with the (k+1)^{th} analog current IQ3 of the main power transistor, this enables a slope of the (k+2)^{th} analog current IQ4 of the main power transistor to decrease.

Processes of other durations may be deduced by analogy. Details are not described herein again.

Based on the foregoing description, according to the current generation circuit in embodiments of this application, a slope of the analog current of the main power transistor automatically changes with a change of an inductance value of a power inductor, so that an inductor current output by the current generation circuit can adapt to the change of the inductance value of the power inductor. Furthermore, the current generation circuit in this application can further adapt to a change of a duty cycle of the drive signal gl or gh, and fitting time of the slope of the analog current of the main power transistor tracks on time of the main power transistor in real time.

In addition, the control end of the second controlled current source is temporarily charged and discharged, to dynamically adjust the current output by the second controlled current source. This can improve a control speed, is more applicable to a high-speed scenario, and can further reduce power consumption and reduce an area occupied by the entire current generation circuit.

An embodiment of this application further provides a power chip. The power chip includes a power device and the drive chip in the foregoing embodiments. The power device includes a main power transistor and a rectifier transistor, and the drive chip is separately connected to the main power transistor and the rectifier transistor. The drive chip can output a sampling current of the rectifier transistor and an analog current of the main power transistor, and control the main power transistor and the rectifier transistor. Because the drive chip provided in embodiments of this application can resolve a problem of inaccurate sampling of an inductor current, control effect of the power chip power can be improved.

An embodiment of this application further provides a switching power supply. The switching power supply includes a controller and the power chip in the foregoing embodiments. The controller is connected to the power chip, so that the controller can receive a sampling current of a rectifier transistor and an analog current of a main power transistor that are output by the power chip, and output a pulse width modulation signal to the power chip based on the sampling current of the rectifier transistor and the analog current of the main power transistor. The power chip is configured to receive the pulse width modulation signal, and drive, based on the pulse width modulation signal, the drive chip to control the main power transistor and the rectifier transistor. Because the drive chip provided in embodiments of this application can resolve a problem of inaccurate sampling of an inductor current, control effect of the switching power supply can be improved.

The foregoing content is merely specific implementations of this application, but is not intended to limit the protection scope of this application. Any variation or replacement readily figured out by a person skilled in the art within the technical scope disclosed in this application shall fall within the protection scope of this application.

## Claims

1. A drive chip, comprising a drive circuit and a current generation circuit, wherein
the drive circuit is configured to connect to a main power transistor and a rectifier transistor, and is configured to control the main power transistor and the rectifier transistor;
the current generation circuit comprises a sampling circuit, a slope control circuit, and a current output circuit;
the current output circuit is configured to output a sampling current of the rectifier transistor in an on duration of the rectifier transistor, and output an analog current of the main power transistor in an on duration of the main power transistor;
the sampling circuit is configured to control, in the on duration of the rectifier transistor based on a current flowing through the rectifier transistor, the current output circuit to output the sampling current of the rectifier transistor; and
the slope control circuit is configured to: control, based on a sampling current that is of the rectifier transistor and that is output by the current output circuit in the on duration of the rectifier transistor in a k^{th} control period and a k^{th} analog current that is of the main power transistor and that is output by the current output circuit in an on duration of the main power transistor in the k^{th} control period, the current output circuit to output a (k+1)^{th} analog current of the main power transistor in an on duration of the main power transistor in a (k+1)^{th} control period, and k is an integer greater than 0.

2. The drive chip according to claim 1, wherein the slope control circuit comprises a first sampling circuit, a second sampling circuit, and a regulation and control circuit;
the first sampling circuit is connected to the current output circuit, and is configured to collect a corresponding first sampling voltage when the current output circuit outputs the k^{th} analog current of the main power transistor in the on duration of the main power transistor in the k^{th} control period;
the second sampling circuit is connected to the current output circuit, and is configured to collect a corresponding second sampling voltage when the current output circuit outputs the sampling current of the rectifier transistor in the on duration of the rectifier transistor in the k^{th} control period; and
the regulation and control circuit is separately connected to the first sampling circuit, the second sampling circuit, and the current output circuit, and is configured to control, based on the first sampling voltage and the second sampling voltage, the current output circuit to output the (k+1)^{th} analog current of the main power transistor in the on duration of the main power transistor in the (k+1)^{th} control period.

3. The drive chip according to claim 2, wherein the regulation and control circuit comprises a regulation and generation circuit, a first switch, and a first controlled current source;
the regulation and generation circuit is connected to the first sampling circuit, the second sampling circuit, and a control end of the first controlled current source, and is configured to control, based on the first sampling voltage and the second sampling voltage that are received, the first controlled current source to generate a first current; and
a first end of the first controlled current source is connected to the current output circuit via the first switch, and the first switch is configured to be in an on state in the on duration of the main power transistor, to enable the first current generated by the first controlled current source to be input to the current output circuit, and control the current output circuit to output the k+1 analog currents of the main power transistor.

4. The drive chip according to claim 3, wherein the regulation and generation circuit is configured to output a control voltage to the control end of the first controlled current source, and the first current increases as the control voltage increases.

5. The drive chip according to claim 4, wherein the regulation and generation circuit comprises a first error amplifier;
a negative-phase input of the first error amplifier is connected to the first sampling circuit, and is configured to receive the first sampling voltage;
a positive-phase input of the first error amplifier is connected to the second sampling circuit, and is configured to receive the second sampling voltage; and
an output of the first error amplifier is connected to the control end of the first controlled current source, and is configured to output the control voltage.

6. The drive chip according to claim 5, wherein the regulation and generation circuit further comprises a second switch, and the second switch is connected between the negative-phase input of the first error amplifier and the positive-phase input of the first error amplifier.

7. The drive chip according to claim 4, wherein the regulation and generation circuit comprises a comparator, a selector, and a signal generator;
a negative-phase input of the comparator is connected to the first sampling circuit, and is configured to receive the first sampling voltage;
a positive-phase input of the comparator is connected to the second sampling circuit, and is configured to receive the second sampling voltage;
an output of the comparator is connected to a first input of the selector, and is configured to output a selection control signal; and
a second input of the selector is configured to receive a selection trigger signal, a first output of the selector is connected to a first control end of the signal generator, a second output of the selector is connected to a second control end of the signal generator, an output of the signal generator is connected to the control end of the first controlled current source, and the selector is configured to control, in response to the selection control signal and the selection trigger signal, the signal generator to output the control voltage based on a first reference current or a second reference current.

8. The drive chip according to claim 7, wherein the signal generator comprises a third switch, a fourth switch, a first current source, a second current source, and a storage capacitor, the first current source is configured to output the first reference current, and the second current source is configured to output the second reference current;
a first end of the first current source is connected to a first reference signal end, a second end of the first current source is connected to a first end of the third switch, a second end of the third switch is connected to the control end of the first controlled current source, and a control end of the third switch is connected to the first output of the selector;
a first end of the fourth switch is connected to the control end of the first controlled current source, a second end of the fourth switch is connected to a first end of the second current source, and a control end of the fourth switch is connected to the second output of the selector;
a second end of the second current source is connected to a second reference signal end; and
a first end of the storage capacitor is connected to the control end of the first controlled current source, and a second end of the storage capacitor is connected to the second reference signal end.

9. The drive chip according to any one of claims 2 to 8, wherein the first sampling circuit is further configured to:
collect and output the first sampling voltage in a first period from a first reference moment to an end moment that are of the on duration of the main power transistor.

10. The drive chip according to claim 9, wherein the first reference moment is a start moment of the on duration of the main power transistor.

11. The drive chip according to any one of claims 2 to 10, wherein the second sampling circuit is further configured to:
collect and output the second sampling voltage in a second period from a start moment to a second reference moment that are of the on duration of the rectifier transistor.

12. The drive chip according to any one of claims 1 to 11, wherein the current output circuit comprises a second controlled current source, and a control end of the second controlled current source is connected to the sampling circuit and the slope control circuit; and
the second controlled current source is configured to:
output, in response to a voltage that is generated to the control end of the second controlled current source through control over the sampling circuit, the sampling current of the rectifier transistor in the on duration of the rectifier transistor; and
output, in response to a voltage that is generated to the control end of the second controlled current source through control over the slope control circuit, the (k+1)^{th} analog current of the main power transistor in the on duration of the main power transistor.

13. The drive chip according to claim 12, wherein responding to the voltage that is generated to the control end of the second controlled current source through control over the slope control circuit comprises:
in response to control by the slope control circuit and a decrease in a voltage at the control end of the second controlled current source, the (k+1)^{th} analog current of the main power transistor whose current value increases is generated, and a slope of the (k+1)^{th} analog current of the main power transistor increases.

14. The drive chip according to any one of claims 1 to 13, wherein the sampling circuit comprises a current detection circuit and a third sampling circuit;
the current detection circuit is configured to be separately connected to a first end and a second end of the rectifier transistor, and is configured to generate a first control signal based on a current at the first end of the rectifier transistor and a current at the second end of the rectifier transistor in the on duration of the rectifier transistor; and
the third sampling circuit is connected to the current detection circuit and the current output circuit, and is configured to output the first control signal to the current output circuit in the on duration of the rectifier transistor, to control the current output circuit to generate the sampling current of the rectifier transistor.

15. A power chip, comprising a power device and a drive chip, wherein
the power device comprises a main power transistor and a rectifier transistor;
the drive chip comprises a drive circuit and a current generation circuit;
the drive circuit is configured to connect to the main power transistor and the rectifier transistor, and is configured to control the main power transistor and the rectifier transistor;
the current generation circuit comprises a sampling circuit, a slope control circuit, and a current output circuit;
the current output circuit is configured to output a sampling current of the rectifier transistor in an on duration of the rectifier transistor, and output an analog current of the main power transistor in an on duration of the main power transistor;
the sampling circuit is configured to control, in the on duration of the rectifier transistor based on a current flowing through the rectifier transistor, the current output circuit to output the sampling current of the rectifier transistor; and
the slope control circuit is configured to: control, based on a sampling current that is of the rectifier transistor and that is output by the current output circuit in the on duration of the rectifier transistor in a k^{th} control period and a k^{th} analog current that is of the main power transistor and that is output by the current output circuit in an on duration of the main power transistor in the k^{th} control period, the current output circuit to output a (k+1)^{th} analog current of the main power transistor in an on duration of the main power transistor in a (k+1)^{th} control period, and k is an integer greater than 0.

16. A switching power supply, comprising a controller and a power chip, wherein
the power chip comprises a power device and a drive chip, and the power device comprises a main power transistor and a rectifier transistor;
the drive chip comprises a drive circuit and a current generation circuit;
the drive circuit is configured to connect to the main power transistor and the rectifier transistor, and is configured to control the main power transistor and the rectifier transistor;
the current generation circuit comprises a sampling circuit, a slope control circuit, and a current output circuit;
the current output circuit is configured to output a sampling current of the rectifier transistor in an on duration of the rectifier transistor, and output an analog current of the main power transistor in an on duration of the main power transistor;
the sampling circuit is configured to control, in the on duration of the rectifier transistor based on a current flowing through the rectifier transistor, the current output circuit to output the sampling current of the rectifier transistor;
the slope control circuit is configured to: control, based on a sampling current that is of the rectifier transistor and that is output by the current output circuit in the on duration of the rectifier transistor in a k^{th} control period and a k^{th} analog current that is of the main power transistor and that is output by the current output circuit in an on duration of the main power transistor in the k^{th} control period, the current output circuit to output a (k+1)^{th} analog current of the main power transistor in an on duration of the main power transistor in a (k+1)^{th} control period, and k is an integer greater than 0;
the controller is connected to the power chip, and is configured to: receive the sampling current of the rectifier transistor and the (k+1)^{th} analog circuit of the main power transistor that are output by the current output circuit, and output a pulse width modulation signal based on the sampling current of the rectifier transistor and the (k+1)^{th} analog current of the main power transistor; and
the power chip is configured to receive the pulse width modulation signal, and drive, based on the pulse width modulation signal, the drive chip to control the main power transistor and the rectifier transistor.
